# EUROPÄISCHE PATENTSCHRIFT

(11) **EP 0 612 664 B1**
(45) Veröffentlichungstag und Bekanntmachung des Hinweises auf die Patenterteilung: **16.07.1997**
(21) Anmeldenummer: 94102549.6
(22) Anmeldetag: 21.02.1994
(51) Int. Cl.: B65D 8/02, B29C 51/08, B29C 51/30

(54) **Verpackung für Fliessmittel, Verfahren zur Herstellung einer solchen Packung und Vorrichtung zur Durchführung des Verfahrens**
Packaging for fluid media, process for producing such a packaging and device for performing the process
Emballage pour produits fluides, procédé de fabrication d'un tel emballage et dispositif de réalisation du procédé

(30) Priorität: 26.02.1993 DE 4305913
(43) Veröffentlichungstag der Anmeldung: 31.08.1994
(73) Patentinhaber: Tetra Laval Holdings & Finance SA, 1009 Pully (CH)
(72) Erfinder: Reil, Wilhelm, D-64625 Bensheim (DE); Bub, Heiko, D-55294 Bodenheim (DE); Korus, Bernhard, D-64289 Darmstadt (DE); Pusch, Gottfried, D-64319 Pfungstadt (DE)
(74) Vertreter: Weber, Dieter, Dr.

(56) Entgegenhaltungen:
- EP-A- 0 428 891
- DE-A- 3 643 030
- FR-A- 1 265 926
- GB-A- 1 129 877

## Beschreibung

Die Erfindung betrifft eine Verpackung für fließfähiges Füllgut mit tubusförmigen Seitenwänden, Boden und Oberwand, die alle aus tiefziehfähigem Kunststoff bestehen, wobei die Oberwand eine mit einem Deckel verschließbare Ausgießöffnung mit hochstehendem Bund aufweist und eine die Packung in einer Ebene parallel zur Längsmittelachse umziehenden Naht derart im Oberboden angeordnet ist, daß sie von der Ausgießöffnung unterbrochen ist und auf diametral gegenüberliegenden Seiten bis fast an den freien, oberen Rand des Bundes ragt, wobei der Bund aus zwei an der Naht verbundenen Bundhälften zusammengesetzt ist, an dem Bund Gewindeeinrichtungen vorgesehen sind, um einen Schraubdeckel mit entsprechendem Gewinde und einer Dichtfläche auf die Verpackung aufzuschrauben, und wobei am freien oberen Rand des Bundes eine ringförmige, passende Dichtvorrichtung angebracht ist.

Die Erfindung betrifft ferner ein Verfahren zur Herstellung einer Verpackung für fließfähiges Füllgut mit tubusförmigen Seitenwänden, Boden und Oberwand, die alle aus tiefziehfähigem Kunststoff bestehen, wobei die Oberwand eine mit einem Deckel verschließbare Ausgießöffnung mit hochstehendem Bund aufweist und eine die Packung in einer Ebene parallel zur Längsmittelachse umziehenden Naht derart im Oberboden angeordnet ist, daß sie von der Ausgießöffnung unterbrochen ist und auf diametral gegenüberliegenden Seiten bis fast an den freien, oberen Rand des Bundes ragt, wobei aus dem ebenen, tiefziehfähigen Kunststoffteil gleichzeitig wenigstens ein Paar von Halbschalen tiefgezogen wird. Außerdem betrifft die Erfindung einer Vorrichtung zum Tiefziehen von Halbschalen aus einer Kunststoffplatte mit zwei spiegelbildlich ausgestalteten Formhälften mit jeweils einem Bundteil.

Bekannt sind Packungen der eingangs genannten Art, die aus preiswertem Kunststoffmaterial durch Tiefziehen ohne viel Abfall hergestellt sind, gut zu stapeln und auch einwandfrei flüssigkeitsdicht sind. Zum Befüllen und Entleeren weist die Oberwand der bekannten Packung ein Loch auf, das durch den erwähnten hochstehenden Bund abgeschlossen ist, und in diesen wird mittels Hotmelt oder dergleichen oder durch Einsiegeln eine Ausgießeinrichtung eingesetzt und befestigt, die aus zwei Teilen besteht. Das Oberteil der verschließbaren und öffenbaren Ausgießeinrichtung kann gegenüber dem Unterteil hochgeklappt werden, und dadurch wird eine Öffnung im Unterteil freigelegt, durch welche das Füllgut entleert werden kann.

Bei der Herstellung des Loches mit dem hochstehenden Bund haben sich Dichtigkeitsprobleme dadurch ergeben, daß einerseits am äußersten oberen Rand des Bundes und andererseits im Nahtbereich Verwerfungen des Materials entstanden sind, bzw. man mußte feststellen, daß sich die Wandungen des Bundes beim Tiefziehen nicht vollständig ausgebildet hatten. Wird dann eine Ausgießeinrichtung eingesiegelt, kann bei vielen Packungen die Dichtigkeit zwar wieder korrigiert werden, im rauhen Betrieb können durch Beanspruchungen der Packung aber doch einzelne Ausgießöffnungen vom Bund gelöst werden, so daß wiederum Leckagen auftreten.

Es sind auch schon Überlegungen angestellt worden, Vorrichtungen zur Ausgestaltung des Bundes zu verbessern, insbesondere wenn die Verpackung aus zwei Halbschalen gebildet ist, die mit Hilfe der erwähnten Naht zu einer nur am Loch offenen Packung miteinander verschweißt werden. Dabei hatte sich gezeigt, daß die Heizplatte im Bereich der Ausnehmung keinen ausreichenden Wärmekontakt mit der zu erwärmenden und tiefzuziehenden Kunststoffplatte hatte, insbesondere im Bereich der Ausnehmung, wo die Verformung im Halsbereich erfolgen mußte. Der Nachteil der mangelhaften Erwärmung führte zu ungleichmäßigen Streckungen im Material.

Bei einer verbesserten Vorrichtung hat man daher in einer dem Tiefziehwerkzeug zugewandten Gegendruckplatte in einem Raum hinter einer Öffnung in der Oberfläche ein in verschiedene Stellungen bewegbares Formteil angeordnet, welches sich einerseits bündig hinter die Anlagefläche der Gegendruckplatte zurückziehen konnte und in einer zweiten Dichtstellung in eine Ausnehmung am Rand des Tiefziehwerkzeuges hineinragt. Dadurch konnte die zu erwärmende Kunststoffplatte in einen wesentlich besseren Wärmekontakt gebracht werden, so daß die vorstehend erwähnten Erwärmungsprobleme mit mangelhaftem Strecken entfielen. Bei solchen Herstellungswerkzeugen handelt es sich aber um komplexe Aufbauten, die im allgemeinen hinsichtlich preiswerterer Herstellungsmöglichkeiten verbesserungswürdig sind.

Es wurde auch aus EP-A-428891 eine Verpackung gemäß Oberbegriffe der Ansprüche 1, 12, 14 und 17 bekannt.

Der Erfindung liegt die Aufgabe zugrunde, eine Verpackung der eingangs genannten Art und Herstellungsmaßnahmen für eine solche derart zu schaffen, daß die Packung als Produkt der Herstellung leicht zu öffnen, dicht zu verschließen und doch wirtschaftlicher herstellbar ist.

Diese Aufgabe wird erfindungsgemäß dadurch gelöst, daß die Dichtvorrichtung eine ringförmige Fläche ist. Die Packung gemäß der Erfindung hat einen Schraubverschluß, dessen Handhabung für jeden Endverbraucht leicht verständlich ist. Durch die ringförmige Fläche wird eine Dichtvorrichtung geschaffen, die mit Hilfe des Gewindes gut abgedichtet werden kann, weil der Verbraucher die Klemmwirkung spürt.

Verpackungen mit Schraubdeckeln sind zwar an sich bekannt. Wenn eine Packung aber eine umlaufende Naht hat, die bis fast an den freien, oberen Rand des Bundes der Ausgießeinrichtung ragt, stehen einer Verschraubung Bedenken entgegen. Erfindungsgemäß wurden nun aber trotzdem Gewindeeinrichtungen am Bund so angeordnet, daß man einen Schraubdeckel mit entsprechendem Gewinde aufschrauben kann. Es ist eine Dichtfläche im Schraubdeckel vorgesehen, die zu einer Dichtfläche am freien oberen Rand des Bundes paßt. Im allgemeinen wird ist eine Dichtfläche im Schraubdeckel vorgesehen, die zu einer Dichfläche am freien oberen Rand des Bundes paßt. Im allgemeinen wird der Bund in Draufsicht ringförmig und insbesondere kreisförmig sein, so daß auch die Dichtflächen am Bund und Schraubdeckel kreisförmig sind.

Bei einer bevorzugten Ausführungsform ist das Gewinde erfindungsgemäß in dem Bund angeordnet. Der Fachmann weiß, daß er beim Tiefziehen sogar recht komplizierte Gebilde ausformen kann. Bei bekannten Werkstücken wurden schon Gewinde durch Tiefziehen eingebracht. Diese Technik hat sich der Erfinder zunutze gemacht und in jede Bundhälfte sozusagen die Hälfte des Gewindes eingebracht, die natürlich zu der entsprechend anderen Gewindehälfte in der anderen Bundhälfte passend ausgestaltet ist. Es kommt darauf an, daß das zusammengesetzte Gesamtgewinde eine kontinuierliche Fortsetzung der Gewindegänge vorsieht, damit der Schraubdeckel einwandfrei aufgeschraubt werden kann.

Bei einer anderen Ausgestaltung der Erfindung ist vorgesehen, das Gewinde von der Naht zu bilden. Die Naht steht nicht nur aus wenigstens einigen Oberflächen der erfindungsgemäßen Packung mehr oder weniger weit senkrecht nach außen heraus, sondern sie steht auch aus dem Bund heraus, der bei der hier betrachteten speziellen Ausführungsform glatt sein kann, also ohne Gewinde. Das Gewinde wird dann ganz von der Naht übernommen. Dazu ist die bezüglich der Ausgießöffnung radial nach außen stehende Kante der Naht am Bund so profiliert, daß die Gewindegänge des Schraubdeckels in dieses Profil eingreifen können, als befände sich dem Schraubdeckel gegenüber - nämlich am Bund - ein Gewinde, obgleich der Bund glatt ist. Auf zwei diametral gegenüberliegenden Seiten des Bundes reicht die Naht bis an die Oberkante des Bundes, und wenn diese beiden profilierten Nahtteile am Bund, weiche diametral einander gegenüberliegen, entsprechend profiliert sind, ist für den aufgesetzten Schraubdeckel eine ausreichende Halterungskraft gegeben, um den Schraubdeckel durch Drehen in der gewünschten Weise so axial auf den Bund nach unten aufschrauben zu können, daß Dichtfläche auf Dichtfläche gelegt wird und ein ausreichender Druck für die gewünschte Dichtung sorgt.

Man kann sich auch eine Kombination der beiden vorgenannten Alternativlösungen vorstellen, nämlich daß außer dem Gewinde im Bund auch die entsprechende Profilierung in der Naht als Gewinde wirkt, so daß der Schraubdeckel auf wenigstens dem größten Teil, vorzugsweise seinem gesamten Umfang ein Gegengewinde am Bund vorfindet.

In letzterem Falle oder auch im Falle des von der Naht übernommenen Gewindes handelt es sich um ein Außengewinde. Die Erfindung ist aber keineswegs auf eine solche Alternative beschränkt.

Untersuchungen und neue Formen haben vielmehr dazu geführt, daß eine Verpackung ausgestaltet werden kann, die erfindungsgemäß dadurch gekennzeichnet ist, daß das Gewinde in dem Bund an der Ausgießöffnung ein vorzugsweise rundum geschlossenes Innengewinde ist und der Schraubdeckel außen im Querschnitt U-förmig mit zum Oberboden hin offenem U ausgestaltet ist und auf seiner Dichtfläche mit einer Abdichtmasse versehen ist. Bei dieser Ausführungsform ist man von den Problemen der Naht unabhängig. Dieses ist sowohl an der Packung als auch an dem Tiefziehwerkzeug relativ leicht anzuformen und stellt bei der vereinigten Packung ein rundum geschlossenes Innengewinde dar. Man könnte einen Schraubdeckel von oben so ausgestalten, daß Greiflaschen, Stege oder radial angestellte Querwandungen ein Einschrauben des Deckels in das Innengewinde des Bundes sicherstellen. Weil der Verbraucher aber gern eine Schraubkappe von außen greift, um damit logisch und gewohnheitsgemäß leichter auf- oder zuzuschrauben, ist der Schraubdeckel auf seinen Außenseiten bzw. rundum an seinem Umfang im Querschnitt U-förmig, wie vorstehend angegeben. Eine Abdichtmasse kann in eine Kegelstumpffläche oder eine durch das U am Umfang des Schraubdeckels gebildete Nut eingelegt sein, so daß nach aufgeschraubtem und festgezogenem Schraubdeckel die eine Dichtfläche einwandfrei fest auf der anderen sitzt und die Packung in der gewünschten Weise dicht ist.

Während man durch Blasformen andere Arten von Verpackungen mit Schraubverschlüssen ausgestalten und gegebenenfalls leichter mit dichten Verschlüssen versehen kann, handelt es sich bei den Dichteinrichtungen des erfindungsgemäßen Verschlusses um ein Tiefziehprodukt mit im allgemeinen dünneren Wänden. Durch die U-förmige Ausgestaltung des Schraubdeckels außen, das rundum geschlossene Innengewinde am Bund innen, durch die Dichtfläche am Bund und die Abdichtmasse im Schraubdeckel wird aber beim Aufschrauben des Deckels eine stabile Gegenfläche geschaffen, so daß das Auf- und Abschrauben des Deckels ohne Probleme funktioniert. Selbst wenn durch die besondere Ausgestaltung der Verpackung aus den zwei schalenförmigen Hälften mit der rundum herausstehenden Naht, welche einerseits die Verpackung in vorteilhafter Weise versteift, andererseits aber im Bereich des Bundes geringste Spalte vorhanden sein sollten, dann sind hier keinerlei Undichtigkeiten zu befürchten, weil diese durch die elastische Abdichtmasse ausgeglichen werden. Beim Aufschrauben des Deckels legt sich diese Abdichtmasse, die beispielsweise Gummi aufweisen kann, auf die Dichtfläche am oberen Rand des Bundes, und die Abdichtmasse dringt dann in etwa vorhandene kleinste Kanülen im Nahtbereich ein und dichtet dort in einwandfreier Weise ab.

Hierfür ist es hilfreich, wenn erfindungsgemäß die Dichtfläche des Bundes und die des Schraubdeckels kegelstumpfförmig ausgestaltet sind. Die Dichtkräfte werden dann optimal ausgenutzt, denn beim Herunterschrauben des Deckels in den Bund sorgen alle axialen Druck-bzw. Zugkräfte ebenso für die Abdichtung wie auch etwa auftretende radiale Kräfte.

Eine andere vorteilhafte alternative Lösung ist aber das in Verbindung mit der Naht vorstehend schon angesprochene Außengewinde, wobei die Verpackung in diesem Falle dadurch gekennzeichnet ist, daß das Gewinde an dem Bund neben der Ausgießöffnung ein Außengewinde ist und daß die Dichtfläche kreisringförmig ist und sich von der äußeren, freien Kante des Bundes zur Mitte der Öffnung hin erstreckt. Die von der Logik her störende Naht auf der Außenseite des Bundes kann durch die entsprechende Profilierung der Außenkante der Naht im Bereich des Bundes überwunden werden, wie vorstehend erläutert. Auf diese Weise und gegebenenfalls unter Zuhilfenahme weiterer Maßnahmen, die nachfolgend beschrieben werden, kann der Bund bei der erfindungsgemäßen Packung unerwartet auch mit einem Außengewinde versehen werden. Aus der Anbringung eines Außengewindes ergeben sich für die Dichtfläche Vorteile, weil diese nach innen zur Mitte der Öffnung hin angestellt sein kann, gewissermaßen unter Verkleinerung der innerhalb des Bundes befindlichen Ausgießöffnung; während bei der vorstehend erwähnten Alternative mit dem Innengewinde die Dichtfläche vorzugsweise schräg nach außen verläuft, so daß sich im Falle des Innengewindes die Ausgießöffnung nach oben außen erweitert. "Zur Mitte der Öffnung hin" bedeutet im Sinne der kreisringförmigen Dichtfläche neben dem Außengewinde, daß die Kreisringfläche an der äußeren, freien Kante des Bundes beginnt und über den gesamten Umfang radial ein Stück weit sich zur Mitte hin erstreckt, nämlich so breit, wie die Kreisringfläche ist. Die kreisförmige Ausgießöffnung ist durch diese kreisringförmige Dichtfläche ein wenig verkleinert. Spricht man bei der radialen Erstreckung der kreisringförmigen Dichtfläche von der "radialen Breite" der Dichtfläche, so beträgt diese bei einer bevorzugten Ausführungsform der Erfindung mindestens 1 mm, vorzugsweise 2 bis 3 mm.

Bevorzugt ist es erfindungsgemäß ferner, wenn auf der ringförmigen Dichtfläche eine schweißbare Deckfolie als Licht- und/oder Gasbarriere aufgesiegelt ist. Es versteht sich, daß das Kunststoffmaterial der Deckfolie mit dem der Dichtfläche und damit des Bundes verschweißbar bzw. versiegelbar sein muß. Die Wandstärke der Verpackung und auch des Bundes ist dicker, während die schweißbare Deckfolie eine um mindestens eine Größenordnung dünnere Kunststoffschicht sein kann. Dieses Aufsiegeln der Deckfolie ist selbstverständlich nur bei der Ausführungsform mit Außengewinde möglich. Anderenfalls könnte man den Schraubdeckel nicht verschließen, ohne die Folie zu zerstören. Bei der Ausführungsform mit Außengewinde kann die Deckfolie also für die Darstellung der Originalitätsgarantie verwendet werden. Auch kann dadurch die Dichtigkeit der Verpackung gesichert werden, wobei die Anforderungen an die Dichtigkeit dann von den Dichtflächen zwischen Schraubdeckel und Bundrand verlagert werden könnten.

Durch eine entsprechende Mischung des Kunststoffmateriales oder Laminierung mehrerer Materialien kann die Deckfolie auch als Barriere gegen eindringendes oder austretendes Gas oder auch zum Lichtschutz verwendet werden.

Bei der Ausführungsform der Verpackung mit Außengewinde am Bund ist es besonders bevorzugt, wenn erfindungsgemäß der Bund an der Ausgießöffnung im Bereich der Naht auf diametral gegenüberliegenden Seiten nach innen derart abgeflacht ist, daß ein ebener Bundteil ohne Gewinde beidseitig der Naht vorgesehen ist und daß die Außenkante der Naht nicht über das Grundprofil des Bundes hinausragt. Durch diese seitliche Abflachung des Bundes werden in überraschender Weise alle Probleme einer Störung des Außengewindes durch die Naht eliminiert Die vorstehend beschriebenen Ausgestaltungen der Nahtkante durch entsprechende Profilierung können entfallen, z.B. wenn dadurch die Werkzeuge vereinfacht werden. Am Grundaufbau der Packung braucht dann nichts geändert zu werden, d.h. die Naht erstreckt sich von der Seitenwand und über die Oberwand bis an den aus der Oberwand herausstehenden Bund heran und an diesem nach oben bis wenigstens fast zu seinem oberen Rand. Wenn die Naht sich ganz bis an den oberen Rand erstreckt, stellt dies keinerlei Störung oder Schwierigkeit dar. Zwar wird durch die seitliche Abflachung des Bundes im Bereich der Naht ein kleines Teilstück am Bund ohne Gewinde geschaffen, das ist aber nachgewiesen unschädlich, weil auf dem gesamten anderen Umfangsteil das Gewinde des Bundes ausreichend starke Zugkräfte auf den Schraubdeckel und damit die Dichtflächen ausübt. Es ist für den Fachmann selbstverständlich, daß er im Falle der seitlichen Abflachung des Bundes das Außengewinde am Bund so groß wählt, daß die Naht vom Außengewinde umschlossen bzw. umgriffen bleibt. Gegebenenfalls kann man die Abflachung weniger tief ausgestalten, wenn man die Naht abschneidet, d.h. diejenige Höhe verkürzt, um welche sie aus dem Bund radial nach außen heraussteht. Bei diesen Maßnahmen berührt sich die hier beschriebene Ausführungsform mit den schon eingangs erwähnten Maßnahmen, daß nämlich die Außenkante der Naht im Bereich des Bundes profilartig bzw. mit Ausnehmungen ausgeschnitten werden kann, so daß die Naht für das Gewinde des Schraubdeckels noch einmal einen Stützpunkt darstellt.

In Kombination mit der Ausführungsform mit Außengewinde ist es also günstig, wenn erfindungsgemäß die aus dem Bund vorstehende Naht außen in Fortsetzung des Außengewindes profiliert ausgeschnitten ist.

Sowohl für die alternative Lösung mit Innengewinde als auch die mit Außengewinde ist es erfindungsgemäß vorteilhaft, wenn das Gewinde ein mindestens zweigängiges Gewinde ist. Der Fachmann weiß, daß es sich bei einem zweigängigen Gewinde um ein solches handelt, bei dem sich mindestens zwei Gewindeabschnitte einander teilweise überlappen. Handelt es sich beispielsweise um ein viergängiges Gewinde, dann sind vier Gewindeabschnitte vorgesehen, deren jeder sich über den Umfang um mehr als 90° erstreckt. Dadurch überlappen sich die Gewindeabschnitte, obwohl sie getrennt sind. Dadurch ergibt sich beim Aufschrauben des Deckels rundum ein Halt für denselben auf dem Bund. Über die gesamten 360° des Umfanges am Bund wird der aufgeschraubte Deckel dann mit ausreichendem Zug auf den Bund der Verpackung hin gezogen.

Es ist weiterhin vorteilhaft, wenn das Gewinde als Rundgewinde ausgestaltet wird, weil sich dadurch die Werkzeugformen besonders leicht vom Werkstück abtrennen bzw. das tiefgezogene Produkt entformen läßt. Durch die Ausgestaltung als Rundgewinde läßt sich das tiefgezogene Material leichter verformen und besser an die Gegenteile anpassen. Die Toleranzen der Gewinde an Bund und Schraubdeckel können dann großer gewählt werden. Außerdem hat sich gezeigt, daß ein solches Gewinde auch stabiler ist. Beim Schraubvorgang müssen bekanntlich Schließkräfte erzeugt werden, die von einem Rundgewinde besser aufzunehmen sind. Um die richtigen Schließkräfte zu erhalten, wird auch die Steigung des Gewindes entsprechend gestaltet. Außerdem ist es zweckmäßig, wenn man das Gewinde so dimensioniert, daß die oben erwähnte Deckfolie sich beim Aufschrauben des Deckels gegebenenfalls in die Gewindegänge hineindrücken kann, ohne die geringsten Störungen zu verursachen. Hinsichtlich der Toleranzen ist vorgesehen, daß das Gewinde vom Schraubdeckel zum Bund der Verpackung etwa 1/10 mm Spiel hat.

Bei weiterer vorteilhafter Ausgestaltung der Erfindung ist die ringförmige Dichtfläche am oberen Rand des Bundes etwa keilförmig ausgestaltet und läuft in eine fast scharfe Kante aus. Mit anderen Worten verringert sich die Materialstärke der ringförmigen Dichtfläche radial von außen nach innen, d.h. vom oberen äußeren Rand des Bundes nach innen zur Mitte hin, wo sich dann die fast scharfe Kante befindet. Dabei ist es vorteilhaft, wenn die ringförmige Dichtfläche am oberen Rand des Bundes eine Neigung zum Inneren der Packung hin hat. Betrachtet man beispielsweise eine vertikale Längsmittellinie durch die Mitte der Ausgießöffnung und legt man durch die Ausgießöffnung eine quer dazu verlaufende Ebene, dann kann die eben betrachtete Neigung der ringförmigen Dichtfläche etwa -10° betragen, wobei bei anderen Ausführungsformen selbstverständlich auch andere Maße möglich sind. Dabei kann es günstig sein, wenn bei einer besonderen Ausführungsform eines Schraubdeckels dessen entsprechende Dichtfläche ebenfalls schwach kegelstumpfförmig ist mit der entsprechenden Neigung von -10° nach innen zur Packung hin.

Die Verdünnung des Materials begünstigt die Befestigung der Deckfolie auf dieser kreisringförmigen Dichtfläche.

Auch erheblich herstellungstechnische Vorteile ergeben sich durch diese sich radial nach Innen fast keilförmig verjüngende Dichtfläche, wie am besten in Verbindung mit dem nun beschriebenen Verfahren zu erläutern ist.

Das Verfahren dient der Herstellung einer Verpackung für fließfähiges Füllgut mit tubusförmigen Seitenwänden, Boden und Oberwand, die alle aus tiefziehfähigem Kunststoff bestehen, wobei die Oberwand eine mit einem Deckel verschließbare Ausgießöffnung mit hochstehendem Bund aufweist und eine die Packung in einer Ebene parallel zur Längsmittelachse umziehende Naht derart im Boden angeordnet ist, daß sie von der Ausgießöffnung unterbrochen ist und auf diametral gegenüberliegenden Seiten bis fast an den freien, oberen Rand des Bundes ragt, wobei aus dem ebenen, tiefziehfähigen Kunstoffteil gleichzeitig wenigstens ein Paar von Halbschalen tiefgezogen wird.

Verpackungen dieser Art werden durch Tiefziehen aus plattenförmigen Zuschnitten aus Kunststoff dadurch hergestellt, daß zwei einseitig offene Schalen, z.B. Halbschalen, tiefgezogen und so angeordnet werden, daß ihre außen rundumlaufenden Ränder gegeneinander gebracht, miteinander verschweißt und so vereinigt werden, daß sich eine hohle Fließmittelpackung ergibt. Für das Befüllen und Verschließen wurde am Rand jeder Kunststoffhalbschale ein Halsbereich so mit einem halbzylindermantelförmigen Kragen ausgestaltet, daß nach dem Vereinigen der beiden Halbschalen im Oberboden die erwähnte verschließbare Ausgießöffnung entsteht.

Wie oben schon im Zusammenhang mit einer bekannten Packung beschrieben wurde, ergaben sich durch die Ausbildung der Ausnehmung im Halsbereich am Rand der Kunststoffhalbschale Erwärmungsschwierigkeiten mit den sich daraus ergebenden Nachteilen einer stellenweise nicht immer ausreichenden Erwärmung. Dabei endet jede Halbschale im Halsbereich. Die Ausnehmung im Haisbereich liegt daher am Rand der Kunststoffhalbschale (als Produkt). Der Rand der gesamten Kunststoffhalbschale ist zwar rundum geschlossen, liegt aber nur außerhalb des Halsbereiches in einer Ebene. Im Halsbereich entlang der Ausnehmung verläuft der Rand nach einer bogenförmigen Fläche aus der erwähnten Ebene heraus und danach wieder zurück in diese Ebene hinein. Durch diese Gestalt der Ausnehmung ergaben sich unzureichende Erwärmungen. Das Material begann beim Tiefziehen in unerwünschter Weise zu wandern und führte zu Deformationen im Halsbereich und insbesondere bei dem hochstehenden Bund an der Ausgießöffnung im Oberboden der späteren Packung. Das Überhitzen der jeweiligen Kunststoffhalbschale im Bereich dieser Ausnehmung und auch zusätzliche Gummidichtungen bei den bekannten Verfahren haben die festgestellten Nachteile noch nicht tiefgreifend genug und vollständig eliminiert, so daß hier Bedarf für Nachbesserungen und Vereinfachungen des Verfahrens besteht.

Zur Lösung der eingangs erwähnten Aufgabe, insbesondere im Hinblick auf eine wirtschaftlichere Herstellbarkeit und ein einfacheres Herstellungsverfahren wird daher gemäß der Erfindung für das Verfahren vorgeschlagen, daß die Halbschalen in der Mitte über einen halbzylindrischen Verbindungskanal miteinander verbunden sind, wobei innerhalb der in einer gemeinsamen Ebene liegenden, rundumlaufenden, geschlossenen Naht ein halbschalenförmiger Packungsteil gebildet wird, der nach dem Tiefziehen mit einem zweiten unter Verbinden der Naht zu wenigstens einem Paar von Packungen verbunden wird, wonach in der Mitte des zylindrischen Verbindungskanales zur Bildung wenigstens einer einseitig offenen Packung mit jeweils einem Bund getrennt wird. Nach dem neuen Herstellungsverfahren werden die Halbschalen, in einer bestimmten Lage zueinander angeordnet, tiefgezogen; nämlich derart, daß sie über einen halbzylindrischen Kanal miteinander verbunden sind, wobei dieser Kanal vorzugsweise einen kleineren Durchmesser hat als der Hauptkörper der Halbschale. Mit anderen Worten hat die Querschnittsfläche des Hauptkörpers der Halbschale eine größere Fläche als die des halbzylindrischen Verbindungskanales. Dann nämlich kann später bei dem erfindungsgemäß angegebenen Trennen jeweils eines Halbschalenpaares in der Mitte des zylindrischen Verbindungskanales aus diesem ein Bund an der Packung werden - bzw. im Falle des halbzylindrischen Kanals ein halber Bund. Nach dem Tiefziehen des Paares von Halbschalen mit den beiden außen angeordneten Hauptkörpern mit größerem Volumen und dem dazwischenliegenden Verbindungskanal mit kleinerem Volumen wird dieses erste Paar von Halbschalen mit einem entsprechend erstellten zweiten Paar von Halbschalen zu einem Paar von Packungen verbunden. Zieht man gleichzeitig mehrere Paare von Halbschalen tief, dann werden auf diese Weise mehrere Paare von Packungen gebildet, bei denen die Naht in der beschriebenen Ebene liegt und sich auch über den Bereich der zwei Bünder erstreckt. Dieses Paar von sozusagen Öffnung zu Öffnung oder Bund zu Bund aneinanderliegender Packungen oder entsprechend mehrere Paare von Packungen werden dann in der beschriebenen Weise in der Mitte des zylindrischen Verbindungskanales getrennt. Nach dem Trennen, z.B. nach einem Säge-oder Schneidvorgang, sind aus jedem zunächst einstückigen Paar von Packungen zwei einseitig offene Packungen geworden.

Dabei ist es besonders bevorzugt, wenn erfindungsgemäß die halbschalenförmigen Packungsteile durch die noch vorhandene Restwärme des Tiefziehvorganges zu einem Paar von Packungen verbunden werden.

Zur Herstellung einer Packung für fließfähiges Füllgut mit tubusförmigen Seitenwänden, Boden und Oberwand, die alle aus tiefziehfähigem Kunststoff bestehen, wobei die Oberwand eine mit dem Deckel verschließbare Ausgießöffnung mit hochstehendem Bund aufweist und eine die Packung in einer Ebene parallel zur Längsmittelachse umziehenden Naht derart im Oberboden angeordnet ist, daß sie von der Ausgießöffnung unterbrochen ist und auf diametral gegenüberliegenden Seiten bis fast an den freien, oberen Rand des Bundes ragt, wobei aus dem ebenen, tiefziehfähigen Kunststoffteil gleichzeitig wenigstens ein Paar von Halbschalen, d.h. zwei Halbschalen zugleich, tiefgezogen wird ist für das Verfahren ferner vorgesehen, daß die Bünde einander gegenüberliegen und innerhalb der in einer gemeinsamen Ebene liegenden, rundumlaufenden, geschlossenen Naht ein halbschalenförmiger Packungsteil gebildet wird, der nach dem Tiefziehen mit einem zweiten unter Verbinden der Naht durch die noch vorhandene Restwärme des Tiefziehvorganges zu wenigstens einer Packung verbunden wird, wonach zwischen den Bünden zur Bildung wenigstens einer einseitig offenen Packung getrennt wird.

Einer der mit diesem Verfahren erreichten Vorteile besteht in der günstigen und nahezu abfallfreien Herstellungsart einer Verpackung der beschriebenen Art mit der umlaufenden Naht. Der zweite und wesentliche Vorteil besteht in der Möglichkeit, auf einfache Weise durch Tiefziehen eine Packung mit einer ausgebildeten Öffnung herzustellen, ohne daß im Bereich der Öffnung irgendwelche Probleme oder die bei den bekannten Verfahren mitunter auftretenden, vorstehend beschriebenen Schwierigkeiten anzutreffen wären. Durch das neue Verfahren wird zwar wieder von tiefgezogenen Halbschalen, die später miteinander vereinigt werden, ausgegangen, allerdings unterschiedlich zu bekannten Verfahren mit dem großen Vorteil, daß um die tiefgezogene Halbschale herum außen ein Rand vorgegeben ist und bis zum Verschweißen zweier Halbschalen miteinander beibehalten werden kann, ohne daß eine Ausnehmung für eine Öffnung im Oberboden der späteren Verpackung aufrechterhalten bleibt und mit besonderen, teilweise komplizierten Mitteln abgedichtet werden muß. Diese beim Tiefziehen und später beim Verschweißen am Rand des schalenförmig tiefgezogenen Produktes rundumlaufende Umrandung liegt in einer Ebene und ist daher bestens zu handhaben. Dieser große Vorteil wird dadurch erreicht, daß bei jeder Gesamthalbschale zwei Einzelhalbschalen gleichzeitig in einer bestimmten Lage zueinander tiefgezogen werden. Diese Lage ist die vorstehend beschriebene, bei weicher die Bünde des Produktes, d.h. der Verpackung, einander gegenüberliegen. Weil die Bünde bei dem fertigen Produkt, der Verpackung, die Öffnung umschließen, kann man diese Position im Verlaufe des Tiefziehverfahrens anschaulich mit der Stellung "Mund-zu-Mund" bei der künstlichen Beatmung im Falle der Lebensrettung vergleichen. Mit anderen Worten werden die Verpackungen in einer solchen Lage tiefgezogen, daß Öffnung gegen Öffnung liegt.

Das Tiefziehen erfolgt für jede Halbschale. Aus zwei Halbschalen wird das spätere Endprodukt, die Verpackung, zusammengesetzt, wie beschrieben ist. Die erwähnte und neue Stellung der Einzelhalbschalen ist aber ebenso schon Öffnung gegen Öffnung. Betrachtet man eine Seite, d.h. eine Gesamthalbschale, die von dem erwünschten ebenen Rand geschlossen umgeben ist, dann erreicht man dies durch die neue, beschriebene Anordnung Öffnung gegen Öffnung mit dem halbzylinderförmigen Bund der einen Einzelhalbschale direkt anliegend an dem halbzylinderförmigen Bund der anderen Einzelhalbschale, welche beide zusammen eine Gesamthalbschale bilden, die durch Tiefziehen in einem Schritt geformt werden kann. Es versteht sich, daß eine Vervielfachung eines solchen Verfahrens leicht dadurch vorgenommen werden kann, daß aus einer entsprechend größeren und vielleicht länglich, rechteckig ausgestalteten Kunststoffplatte nicht nur eine Gesamthalbschale sondern eine Vielzahl - gegebenenfalls zehn gleichzeitig - Gesamthalbschalen durch Tiefziehen ausgeformt wird. In einer Tiefziehmaschine kann nun die eine oder die Vielzahl von Gesamthalbschalen auf der einen Seite eines symmetrischen Aufbaues und gleichzeitig dasselbe Produkt auf der anderen Seite durch Tiefziehen geformt werden, so daß beide Gesamthalbschalen oder die Vielzahl von Gesamthalbschalen gleichzeitig erstellt und unter Ausnutzung der noch vorhandenen Restwärme aus dem Tiefziehvorgang dann Naht an Naht zusammengelegt werden und durch Verschweißen zu einem außen rundum vollständig geschlossenen Gesamtgebilde vereinigt werden.

Wenn in der erfindungsgemäßen Lösung von dem gleichzeitigen Tiefziehen eines Paares von "Halbschalen" die Rede ist, dann ist hier die Gesamthalbschale auf einer Seite des Werkzeuges gemeint. Es ist diejenige Halbschale, die aus einem ebenen, plattenförmigen Kunststoffteil oder -zuschnitt tiefgezogen wird. Dem widerspricht nicht, daß auf der einen Maschinenseite statt einer Gesamthalbschale eine Vielzahl von z.B. acht oder zwölf Gesamthalbschalen gleichzeitig durch Tiefziehen erstellt wird. Die in der erfindungsgemäßen Lösung erwähnte "Halbschale" ist eine Einzelhalbschale, welche nach dem Entformen die eine Hälfte der späteren Verpackung darstellt. Die Gesamthalbschale wird durch ein Paar von Einzelhalbschalen gebildet. Wenn also von dem Tiefziehen eines "Paares von Halbschalen" in bestimmter Stellung gesprochen ist, dann wird darunter verstanden, daß nach dem Entformen die Hälften von zwei späteren Packungen tiefgezogen sind. "Wenigstens" ein Paar von Halbschalen bedeutet, daß wenigstens eine Gesamthalbschale tiefgezogen wird, daß möglicherweise aber auch acht, zehn, zwölf oder eine andere Anzahl von Gesamthalbschalen gleichzeitig auf einer Seite des Tiefziehwerkzeuges hergestellt werden kann. In der folgenden Beschreibung wird zur Vereinfachung die Lösung anhand eines Paares von Halbschalen erläutert. Mit anderen Worten stehen hierbei zwei Einzelhalbschalen einander Bund gegen Bund gegenüber. Dies ist auf der einen Maschinenseite der Fall und ebenso auf der gegenüberliegenden Maschinenseite, weil erst durch Vereinigen der tiefgezogenen Halbschalen der geschlossene Raum mit zwei verbundenen Packungen durch Verschweißen gebildet werden kann.

Es wird also von einem Paar von Halbschalen, d.h. von zwei, Bund gegen Bund aneinanderliegenden Einzelhalbschalen gesprochen, die eine Gesamthalbschale bilden. Es ist die Lehre dieser Erfindung, ein Paar von Halbschalen - mit anderen Worten eine Gesamthalbschale - so tiefzuziehen, daß dieses Paar außen einen rundumlaufenden, geschlossenen Rand hat, welcher die spätere Naht der Verpackung wird.

Nach dem Entformen des nun klar beschriebenen Paares von Halbschalen versteht sich, daß durch das Aneinanderlegen zweier Paare von Halbschalen Rand auf Rand bzw. Naht auf Naht und Andrücken der Ränder die Schweißnaht der späteren Verpackung entsteht und damit gleichzeitig ein Paar von Packungen als Einheit gebildet ist. Diese Einheit ist nach außen hin geschlossen.

Damit aus dieser durch Tiefziehen und Verschweißen gebildeten Einheit ein Paar von Verpackungen werden kann, wird nach dem Verbinden im Nahtreich "zwischen den Bünden" getrennt. Dieses Trennen erfolgt in zweckmäßiger Weise erst unmittelbar vor dem Füllen der Einzelpackung. Erst durch das Trennen wird die nach außen geschlossene Einheit des Paares von Packungen eine - und danach die andere - einseitig offene Packung.

Es hat sich gezeigt, daß auf diese Weise das Einbringen eines Gewindes in den Bund überraschend einfach gelingt. Durch die neue Methode des paarweisen Tiefziehens von Halbschalen liegt der früher kritische Bereich mit der Ausgießöffnung nicht mehr außen am Rand des tiefgezogenen Produktes sondern in der Mitte. Die Haltekräfte für das Tiefziehen sind vollständig außen in den rundum geschlossenen Rand verlegt und daher außen ungestört Man erhält auf diese Art wieder ein Behältnis, das nach den herkömmlichen, bekannten Tiefziehverfahren erstellt werden kann, obwohl aus zwei Halbschalen gebildete Packungen mit nahezu beliebig gestalteter Ausgießöffnung mit hochstehendem Bund als Produkt entstehen. Das liegt daran, weil erfindungsgemäß praktisch ein nach außen geschlossenes Zwischenprodukt, ein hohler, nach außen geschlossener Körper gebildet wird, der vorzugsweise erst unmittelbar vor dem Befüllen so getrennt wird, daß die zwei Einzelpackungen entstehen. Damit bleibt das Innere der Einzelpackung weitgehend sauber. Es versteht sich, daß dabei neben dem Bund einige Teile aus der flachen bzw. ebenen Naht ausgestanzt werden können. Es versteht sich auch, daß man sowohl ein Außengewinde als auch ein Innengewinde in den Bund oder in Bereiche am Bund anbringen kann. Auch eine Dichtfläche kann man am oberen freien Rand des Bundes ohne Probleme anbringen.

In diesem Zusammenhang ist es besonders vorteilhaft, wenn erfindungsgemäß die kegelstumpfförmige Dichtfläche nach dem Trennen des Formlings zwischen den Bünden nach außerhalb der Packung hochsteht und - vorzugsweise nach dem Füllen - zu einem in das Innere der Packung ragenden Kegelstumpf eingeformt wird. Betrachtet man ähnlich der eingangs erwähnten Beschreibung eine senkrecht aus dem Oberboden aus der Ausgießöffnung herausstehende, gedachte Längsmittellinie, dann kann die Kegelstumpfform der Dichtfläche im Querschnitt gesehen vor dem Trennen so ausgestaltet sein, daß der Kegelstumpf sich nach unten zum Packungsinneren hin erweitert. Mit anderen Worten steht im Querschnitt die Kante einer solchen kegelstumpfförmigen Dichtfläche unter einem Winkel von z.B. etwa +10° nach oben gegen die betrachtete Längsmittellinie. Dies ist der Zustand nach der Fertigstellung des Paares von Halbschalen, mit anderen Worten der zwei Einzelhalbschalen oder der einen Gesamthalbschale. Daraus wird dann nach dem Vereinigen ein Paar von Packungen, deren Bünde Dichtfläche an Dichtfläche und Bund an Bund gegeneinanderliegen. Dieser Gesamtraum von zwei Paaren von Packungen wird dann getrennt, weshalb nach dem Trennen des Formlings aus dem einen Paar von Packungen als Einheit zwei separate, einseitig offene Packungen entstehen. Bei diesen steht nach dem Trennen die kegelstumpfförmige Dichtfläche nach außerhalb der Packung hoch. Zweckmäßig ist es nun ferner, in der beschriebenen Weise später diese Dichtfläche in das Innere der Packung hineinzuformen, so daß im Querschnitt gesehen die Kante der Dichtfläche nach unten und innen zur Längsmittelachse unter einem Winkel von z.B. etwa -10° angestellt ist.

Dabei ist es bevorzugt, wenn erfindungsgemäß der freie, obere Rand der einseitig offenen Packung längs der Trennlinie unter Einwirkung von Wärme geglättet wird. Durch ein Werkzeug wird zusätzliche Wärme separat zugeführt, z.B. durch einen heißen Formstempel. Mit diesem ist ein Glätten des freien oberen Randes möglich, ob die Dichtfläche angeformt ist oder nicht, ob sie kegelstumpfförmig ist oder in einer Ebene liegt und ob die Spitze des Kegelstumpfes nach innen oder nach außen gerichtet ist.

Es ist auch bevorzugt, auf die ringförmige Dichtfläche des oberen Randes zusätzlich eine separate Folie aufzusiegeln, und das erwähnte Glätten kann gegebenenfalls direkt beim Ansiegeln der Folie auf die Dichtfläche vorgenommen werden. Außerdem ist es möglich, die Folie in demjenigen Zustand der Dichtfläche auf diese aufzusiegeln, wenn sie kegelstumpfförmig ist und sich nach außen oben verjüngt, die Kante also im Querschnitt unter +10° gegen die Längsmittellinie angestellt ist. Es hat sich als besonders vorteilhaft herausgestellt, wenn durch oder bei dem Ansiegeln dieser separaten Deckfolie auf die Dichtfläche diese nach außen verjüngt ausgebildete Ringdichtfläche nach innen und unten eingefaltet wird mit der Folge, daß die Neigung der Kante im Querschnitt gesehen aus der Stellung von +10° in die Stellung von -10° eingeformt wird.

Die auf diese Weise vorgenommene Abdichtung der Ausgießöffnung der Packung ist gleichzeitig eine Originalitätskontrolle für den Endverbraucher, denn dieser muß vor dem ersten Entleeren der Verpackung die Folie abreißen. Hierfür ist es zweckmäßig, wenn die Deckfolie wenigstens an einer Ecke der Ausgießöffnung übersteht, wodurch sozusagen eine Grifflasche gebildet ist.

Die Vorrichtung zum Tiefziehen von Halbschalen aus einer Kunststoffplatte mit zwei spiegelbildlich ausgestaltete Formhälften mit jeweils einem Bundteil ist erfindungsgemäß dadurch gekennzeichnet, daß die Formhälften an den Bundteilen gegeneinanderliegen und daß die zwei Formhälften mit den Bundteilen über eine gemeinsame, erhabene Kante verbunden sind, die im Bereich der Bundteile im Querschnitt V-förmig ist. In analoger Weise wie vorstehend in Verbindung mit dem Verfahren von dem Paar von Halbschalen gesprochen ist, weist das Tiefziehwerkzeug, d.h. die Vorrichtung gemäß der Erfindung, zwei Formhälften oder mit anderen Worten ein Paar von Formhälften auf. Diese zwei Formhälften bilden eine Einheit. Sie sind einerseits außen von einem im wesentlichen ebenen Nahtbereich umgeben und haben andererseits im Mittelbereich die zwei erwähnten, aneinanderliegenden Bundteile. Dadurch sind die zwei Formhälften spiegelbildlich ausgestaltet bzw. spiegelbildlich angeordnet, sozusagen Kopf an Kopf mit den Fußteilen nach außen voneinander fort liegend. Es handelt sich also um sogenannte Einzelformhälften, die in der Mitte eine gemeinsame, erhabene Kante haben, bezüglich welcher die eine Einzelformhälfte spiegelbildlich zur anderen Einzelformhälfte ausgestaltet ist. Insgesamt bildet die Einheit der Gesamtformhälften ein Tiefziehwerkzeug mit außen durchgehendem, im wesentlichen in einer Ebene liegenden Rand. Die Bundteile liegen innerhalb dieses Randes, z.B. in einem Mittelbereich des Formhälftenpaares. Die erhabene Kante zwischen den beiden Bundteilen befindet sich fast ausschließlich in der halbzylindermantelförmigen Vertiefung des Bundteiles. Dabei stört keineswegs, wenn bei weiterer erfindungsgemäßer Ausgestaltung ein wenigstens zweigängiges Gewinde in dem jeweiligen Bundteil angeordnet ist.

Blickt man auf die im Querschnitt V-förmige Kante von oben senkrecht in den Hohlraum der Einheit mit den zwei Formhälften, dann sieht man die scharfe Kante des V, d.h. das V öffnet sich vom Beobachter fort nach unten bzw. zur Außenwandung der Form hin.

Die Vorrichtung zum Tiefziehen sollte vorzugsweise bei besonderen Ausführungsformen mit weiteren Merkmalen derart ausgestaltet sein, daß die eingangs beschriebene Verpackung hergestellt werden kann bzw. das oben beschriebene Verfahren mit dieser Vorrichtung durchgeführt werden kann. Hier handelt es sich um spezielle bevorzugte Ausführungsformen der Tiefziehvorrichtung.

Unabhängig von dieser Kombination von Merkmalen ist es erfindungsgemäß aber weiter vorteilhaft, wenn die Tiefziehvorrichtung in Verlängerung der V-förmigen, erhabenen Kante in dem jeweiligen an den Bundteil anschließenden Randteil eine weiterführende, erhabene, etwa 1 mm breite Rippe aufweist, welche zwei gegeneinanderliegenden Formhälften gemeinsam ist. Diese im Querschnitt etwa U-förmige oder auch kastenförmige, weiterführende Rippe dient mit Vorteil dazu, im Bereich der späteren Schweißnaht bzw. im Randbereich der Tiefziehform außerhalb des Bundes, wo die oben erwähnte, erhabene Kante vorgesehen ist, ebenfalls eine verdünnte Stelle zu erzeugen. Hierdurch kann das Trennen erheblich erleichtert werden. Beispielsweise kann das Trennwerkzeug durch die verdünnte Naht zwischen den Bünden des fertigen Produktes geführt werden, und es ist auch durch die geringere Materialdicke eine Erleichterung des Trennvorganges selbst geschaffen. Auch die Genauigkeit der Trennung wird dadurch begünstigt.

Vorteilhaft ist es erfindungsgemäß weiterhin, wenn im Bereich der im Querschnitt V-förmigen, erhabenen Kante wenigstens eine, die Kante nach innen überragende, etwa nadelförmige Erhöhung vorgesehen ist. Durch diese legt sich das Material beim Tiefziehen so auf, daß sich ein nadelspitzengroßes Loch im Endprodukt ergibt. Dieses schafft eine Belüftungsmöglichkeit für den geschlossenen Innenraum zweier, entlang der Schweißnähte verbundenen Formhälften. Durch die Tiefzieh- und Schweißwerkzeuge erwärmt sich nicht nur die Wandung der tiefgezogenen Packung sondern auch die darin befindliche Luft. Verständlicherweise kühlt diese nach dem Herstellungsprozeß ab und verliert an Volumen. Damit die Verpackung durch die Abkühlung der eingeschlossenen Luftmenge nicht kollabiert, ist die Belüftung über das nadelspitzengroße Loch am äußeren oberen Rand des jeweiligen Bundes der separierten Packung vorgesehen. Der Durchmesser des durch die nadelförmige Erhöhung erreichten Loches liegt bei einer bevorzugten Ausführungsform im 1/10 mm Bereich, vorzugsweise beträgt der Durchmesser des Loches 1/10 mm bis 9/10 mm. Beim Abdichten über die erwähnte Dichtfläche stört das Loch nicht.

Erfindungsgemäß ist ferner eine Vorrichtung vorgesehen mit Einrichtungen zum formgerechten, parallelen Zusammenführen wenigstens zweier Formhälften und Zusammenführen der jeweils rundum geschlossenen Randteile der spiegelbildlich ausgestalteten Formhälften für ein Zusammenschweißen der darin befindlichen Halbschalen. Man kann diese Einrichtungen, mit welchen die Formteile gehaltert werden, drehbeweglich oder translatorisch beweglich ausgestalten, und die Bewegungswege der Halteeinrichtung können auch translatorische sowie Drehbewegungen kombiniert enthalten, soweit dadurch die zwei Formhälften formgerecht derart zusammengeführt werden können, daß nach dem Zusammenführen die beiden Formhälften parallel zueinander liegen Naht auf Naht. Auf diese Weise können nämlich die in den Formhälften befindlichen Halbschalen so zusammengeführt werden, daß die rundum geschlossenen Randteile, die noch warm sind, aus der Restwärme des Tiefziehvorganges, aufeinandergelegt und gegeneinandergedrückt werden mit der Folge des Schweißvorganges. So werden aus der Halbschale der einen Maschinenseite unter Vereinigung mit der Halbschale von der anderen Maschinenseite zwei Verpackungen gebildet, die nach außen - bis auf das nadelspitzenförmige Loch - geschlossen sind, bevor eine Trennung erfolgt ist. Die Halbschalen sind also mit diesem Werkzeug durch Tiefziehen zu erstellen und danach zusammenzuschweißen. Nach dem Entformen ergibt sich der beschriebene innen hohle und nach außen im wesentlichen abgeschlossene Körper der Einheit der zwei Kopf an Kopf oder Mund zu Mund angeordneten Verpackungen, die vor dem Befüllen voneinander getrennt werden.

Während die Originalitätsgarantie bei der Ausführungsform mit der Deckfolie sehr einfach vorgesehen werden kann, ist dies aber auch bei anderen Ausführungsformen über den Deckel möglich. Vor dem Aufsetzen der Deckel bzw. Aufschrauben der Schraubdeckel werden diese rollenartig gelagert. Der jeweilige Deckel wird also von der Rolle gezogen, abgeschnitten und dann am Bund der Oberwand angebracht. Zwischen zwei Deckeln befindet sich auf der Rolle ein Verbindungsstück. Wenn nun das Verbindungsstück nur von einem Deckel abgeschnitten und am anderen hängen gelassen wird, dann kann man dieses Verbindungsstück als Schweißfahne verwenden und nach der Aufbringung des Deckels auf die Ausgießöffnung bzw. den Bund der Verpackung an der Wandung daneben aufheften. Ohne ein Abreißen und Lösen dieser Heftfahne kann der Deckel von der Verpackung gemäß der Erfindung nicht entfernt werden. Dies ist eine praktische Originalitätsgarantie.

Weitere Vorteile, Merkmale und Anwendungsmöglichkeiten der vorliegenden Erfindung ergeben sich aus der folgenden Beschreibung bevorzugter Ausführungsbeispiele in Verbindung mit den anliegenden Zeichnungen. Es zeigen:
- Figur 1: die Seitenansicht einer Verpackung mit an der Ausgießöffnung hochstehendem Bund und der außen die Packung umziehenden Naht, wobei der Bund mit einem Innengewinde versehen ist,
- Figur 2: eine abgebrochen und teilweise im Querschnitt dargestellte Ansicht durch die mit einem Schraubdeckel verbundene Ausgießöffnung der Verpackung nach Figur 1,
- Figur 3a: die Seitenansicht einer einseitig offenen Verpackung mit Außengewinde,
- Figur 3b: eine Bodenansicht der Verpackung der Figur 3a,
- Figur 4a: eine Seitenansicht auf die Verpackung der Figur 3a, wenn man beispielsweise von rechts nach links blickt,
- Figur 4b: eine Draufsicht auf die Verpackung nach den Figuren 3a und 4a unter Darstellung des seitlich angeflachten Bundes,
- Figur 5: die Seitenansicht zweier Kopf an Kopf miteinander verbundener Verpackungen, wenn man in Richtung der Schweißnaht blickt, vor dem Trennen des Gesamtkörpers,
- Figur 6: eine Ansicht der Verpackung nach Figur 5, wenn man seitlich beispielsweise von rechts auf diese blickt, senkrecht auf die Ebene der Schweißnaht,
- Figur 7: eine Draufsicht auf die Tiefziehvorrichtung, unten abgebrochen, wobei drei Paare von Formhalbschalen mit spiegelbildlich ausgestalteten Formhälften zu sehen sind und die Bundteile aneinanderliegen und für Außengewinde vorgesehen sind,
- Figur 8: eine vergrößerte Teilansicht des Werkzeuges der Figur 7, wobei der Bereich zwischen zwei Paaren von Formhälften zwischen vier Bünden dargestellt ist,
- Figur 9: eine abgebrochene und links aufgeschnittene Seitenansicht der vereinigten Packungseinheit vor dem Trennen in vergrößertem Maßstab,
- Figur 10a: eine vergrößerte und abgebrochene Einzelheit entsprechend dem unteren gestrichelten Kreis Xa der Figur 8 und
- Figur 10b: ebenfalls abgebrochen und in vergrößertem Maßstab eine Einzelheit entsprechend dem gestrichelten Kreis Xb der Figur 8.

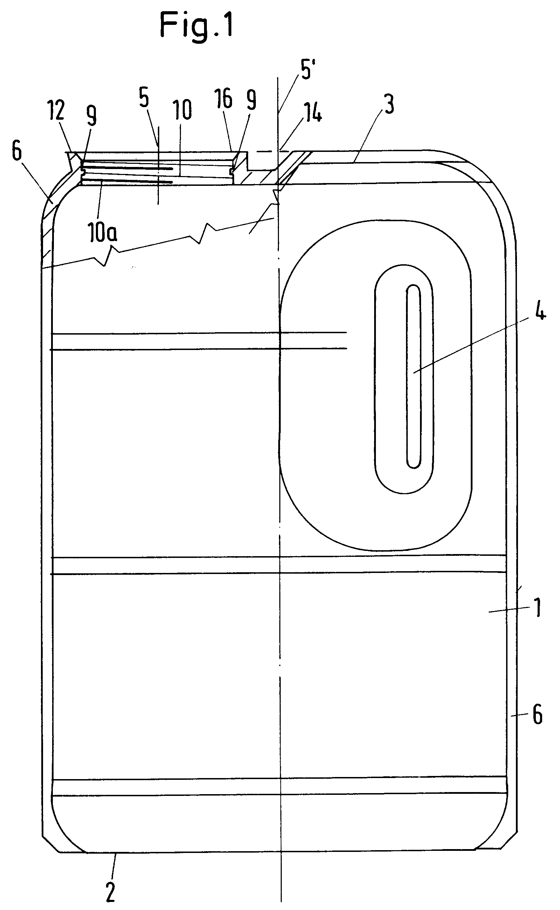

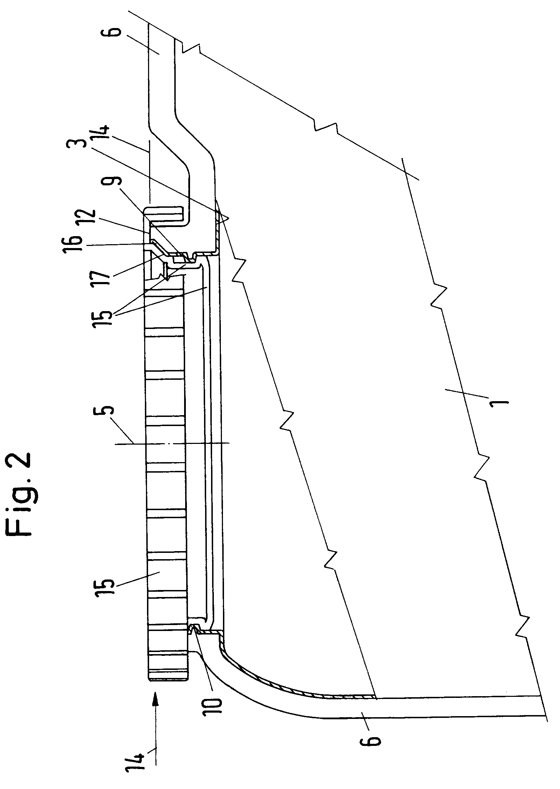

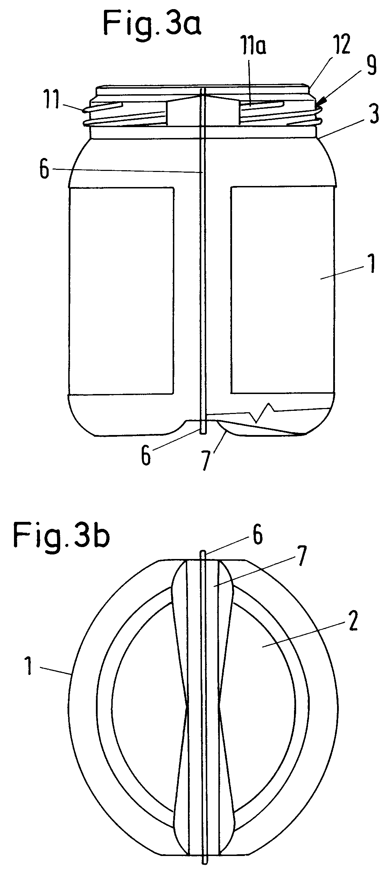

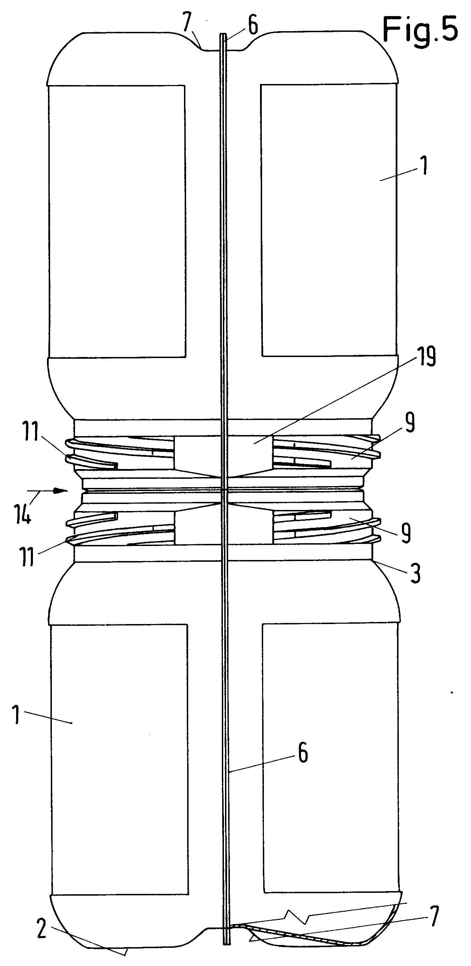

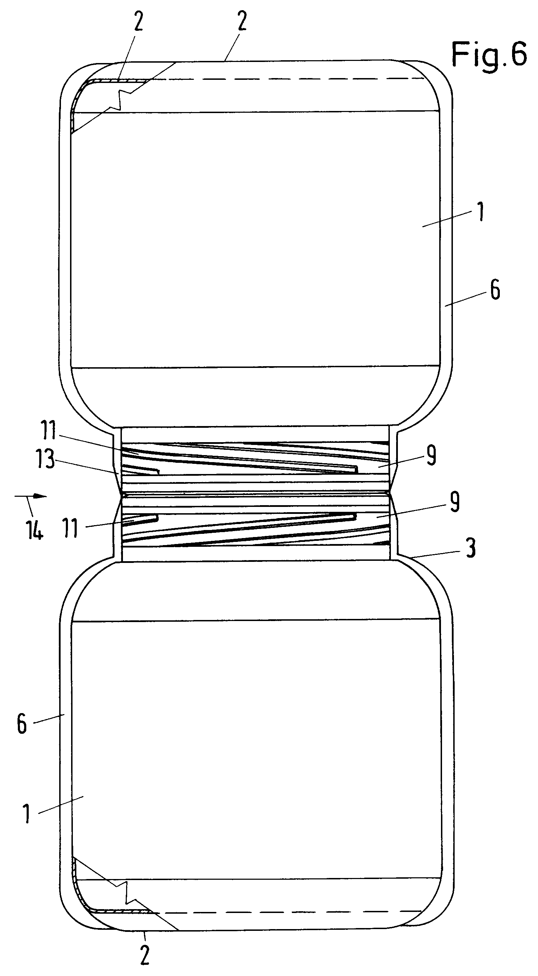

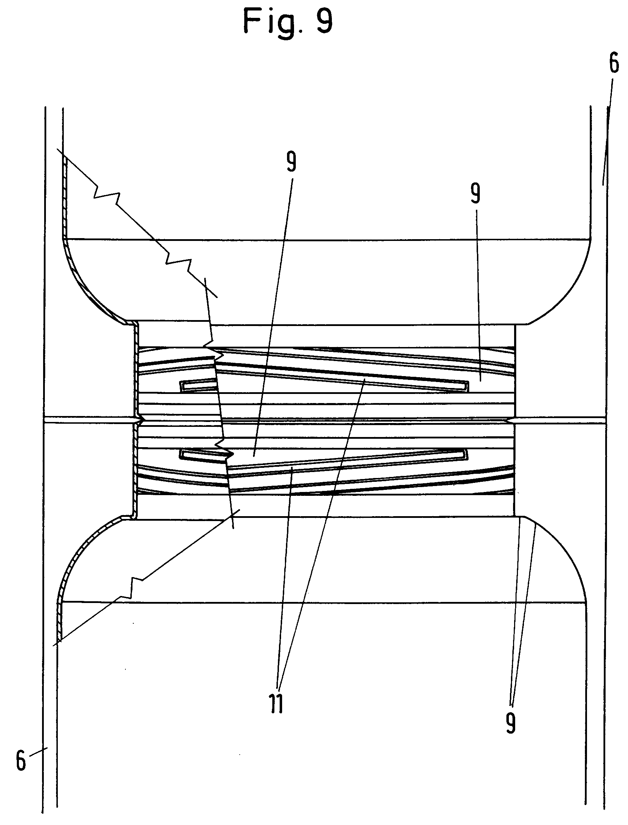

In Figur 1 ist in Seitenansicht eine erste Fließmittelpackung dargestellt mit tubusförmigen Seitenwänden 1, Boden 2 und Oberwand 3. Nicht näher bezeichnete, in Figur 1 horizontal verlaufend gezeigte Versteifungssicken laufen in gleichmäßigen Abständen über die Seitenwand 1, und in deren oberem, hinterem Bereich befindet sich die Griffmulde 4. In einer Ebene parallel zur Längsmittelachse 5, die parallel zur Längsachse 5' der gesamten Verpackung verläuft, liegt eine Naht 6, auch Schweißnaht genannt, umzieht die Verpackung und teilt sie in zwei Hälften, wie man bei den Ausführungsformen nach den Figuren 3 und 5 gut erkennt. Diese Naht 6 durchzieht den Boden 2 längs einer Vertiefung 7, so daß insgesamt gesehen der Boden 2 im wesentlichen flach ist und die Aufsetzfläche der jeweiligen Verpackung überwiegend durch ebene Teilflächen gebildet wird, ohne daß die herausstehende Naht 6 stört. Im Oberboden 3 wird die Naht 6 durch eine Ausgießöffnung 8 unterbrochen, die außen einen hochstehenden Bund 9 aufweist. Dessen Wandstärke erkennt man besonders deutlich in Figur 2 in dem rechts aufgebrochenen Teil des Bundes 9. Im Bund 9 der Figuren 1 und 2 ist ein Innengewinde 10 angeordnet, während im Bund 9 der Ausführungsformen nach den Figuren 3 bis 10 ein Außengewinde 11 vorgesehen ist.

Die Naht 6 ragt bei der Ausführungsform nach den Figuren 1 und 2 auf diametral gegenüberliegenden Seiten des Bundes bis an seinen freien oberen Rand 12. Bei den Ausführungsformen nach den anderen Figuren ragt die Naht 6 ebenfalls bis an den freien oberen Rand 12 des Bundes 9, läuft aber im letzten Stück 13 verjüngt auf diesen zu.

Aus der Darstellung der Figur 5 erkennt man, daß die Naht 6 eigentlich aus zwei Randflanschen des Paares von Formhälften gebildet ist, denn diese Randflansche sind zu der Naht zusammengeschweißt, weshalb die Naht 6 auch Schweißnaht genannt ist. Aus Figur 5 erkennt man auch die nach außen im wesentlichen geschlossene Gesamteinheit der zwei Kopf an Kopf über die Bünde 9 miteinander verbundenen Packungen, die aus dem linksseitigen Formhälftenpaar und dem rechtsseitigen Formhälftenpaar gebildet sind. Getrennt wird entlang der in Figur 5 durch den Pfeil 14 dargestellten Linie. Durch das Trennen werden die "Paare" voneinander separiert, so daß sich dann die Einzelpackungen ergeben, wie in den Figuren 1 sowie 3 und 4 dargestellt ist. Bei der ersten Ausführungsform nach den Figuren 1 und 2 mit dem Innengewinde 10 liegt die Trennlinie 14 in der Oberkante der Naht 6 am Oberboden 3 und im freien oberen Rand 12 des Bundes 9. Der Bund 9 ist folglich aus zwei Bundhälften zusammengesetzt, die nicht besonders bezeichnet sind.

Ein Schraubdeckel 15, der nur in Figur 2 dargestellt ist, dient dem Verschließen der Ausgießöffnung 8. Er trägt ein entsprechendes Innengewinde für die Ausführungsform nach den Figuren 1 und 2; und ein Außengewinde für die Verpackung nach den anderen Ausführungsformen.

Figur 2 zeigt die im Querschnitt am Umfang U-förmig ausgebildete Ausgestaltung des Schraubdeckels, dessen U nach unten zum Oberboden 3 hin offen ist. Am rechten Ende des Deckels 15 ist dieser in Figur 2 abgebrochen und im Querschnitt dargestellt. Hier erkennt man auch, daß der Bund 9 nach oben zum oberen freien Rand 12 hin mit einer kegelstumpfförmigen und ringförmigen Dichtfläche 16 versehen ist, der eine entsprechende Dichtfläche im Deckel 15 gegenübersteht. An dieser ist eine Abdichtmasse 17 befestigt, die sich beim Aufschrauben auf die Dichtfläche 16 des Bundes 9 drückt. Bei der Ausführungsform nach den Figuren 1 und 2 erkennt man, daß im Querschnitt die Linie der kegelstumpfförmigen Dichtfläche 16 unter 45° zur Längsmittellinie 5 angestellt ist.

Die Ausgestaltung des Deckels 15 mit einem Gewinde, welches dem Innengewinde 10 einerseits oder dem Außengewinde 11 andererseits des Bundes 9 entspricht, ist selbstverständlich, so daß das Gewinde im Schraubdeckel 15 nicht näher bezeichnet ist. Auch die Profilierung der Naht 6 im Bereich des Bundes 9 zur Schaffung eines Gegengewindes für das Gewinde des Schraubdeckels ist bei den Ausführungsformen hier nicht besonders dargestellt aber von selbst verständlich.

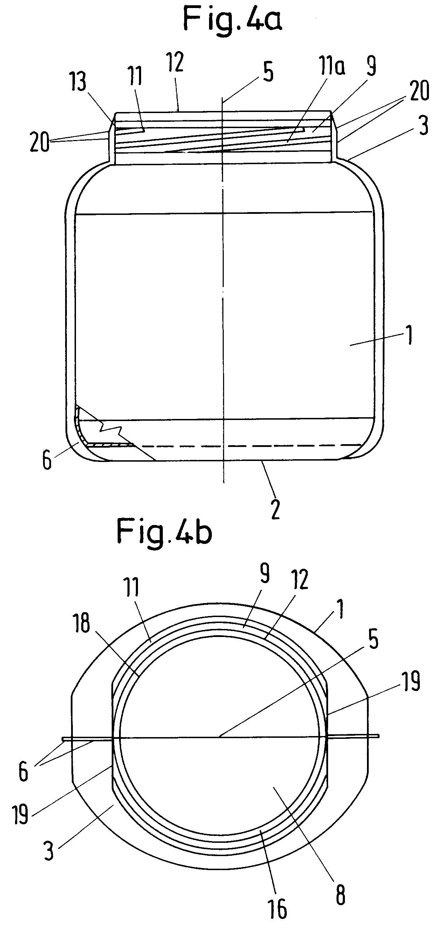

Betrachtet man die zweite Ausführungsform nach den Figuren 3 ff. genauer, dann erkennt man neben der Ausgießöffnung 8 die kreisringförmige Dichtfläche 16 an der äußeren, freien Kante 12 des Bundes 9, die sich von dieser Kante 12 zur Mitte der Öffnung 8 hin erstreckt. Beispielsweise erkennt man diese Dichtfläche 16 gut aus Figur 4b.

Figur 4b ist die Draufsicht auf die Verpackung mit dem Außengewinde 11. Die Blickrichtung fällt mit der Richtung der Längsmittelachse 5 zusammen, die in Figur 4b als Punkt in der Mitte erscheint. Die Ausgießöffnung 8 wird durch den innersten Kreis 18 gebildet, welcher eine keilförmig verjüngte, fast scharfe Kante 18 der ringförmigen Dichtfläche 16 darstellt. Von dieser scharfen Kante 18 aus erstreckt sich also die Dichtfläche 16 radial (von der Mitte 5 nach außen) bis zu dem zweiten Kreis 12, welcher den oberen Rand 12 des Bundes 9 darstellt.

In Figur 4b erkennt man auch, daß der Bund 9 im Bereich der Naht 6 auf diametral gegenüberliegenden Seiten nach innen, d.h. zur Mitte 5 hin, derart abgeflacht ist, daß auf jeder Seite im Bereich der Naht 6 ein ebener Bundteil 19 ohne Gewinde beidseitig der Naht 6 entsteht. Aus Figur 4a erkennt man ferner, daß die mit 20 bezeichnete Außenkante der Naht 6 im Bereich des Bundes 9 nicht über das Grundprofil des Bundes 9, weiches kreisförmig ist, hinausragt. Blickt man gemäß Figur 4b oben auf den Bund 9, dann kann man sich dessen Grundprofil als Fortsetzung des äußeren Kreises mit dem Außengewinde 11 vorstellen.

Wenn eine Schraubkappe auf einen derart ausgestalteten Bund 9 einer Verpackung wie nach den Figuren 3 und 4 gezeigt ist, aufgeschraubt wird, umgreift das Gewinde des Schraubdeckels 15 auch die Naht 6 im Bereich des Bundes 9, weil diese in ihrer Höhe so verkürzt ist, daß die Außenkante 20 in der beschriebenen Weise vom Schraubdeckel störungsfrei umgriffen werden kann. Alternativ könnte diese Außenkante 20 auch entsprechend profiliert sein, so daß eine Art Fortsetzung des Außengewindes 11 gegeben ist und der Schraubdeckel außer im Bereich des Außengewindes 11 eine Unterstützung auch an der entsprechend profilierten (nicht gezeigt) Außenkante 20 der Naht 6 erfährt.

Das Gewinde 10 und 11 ist bei den hier gewählten Ausführungsformen ein viergängiges Gewinde, und man erkennt die vier Gewindeabschnitte 10a, 11a, die sich über mehr als 90° über den Umfang erstrecken und einander folglich überlappen.

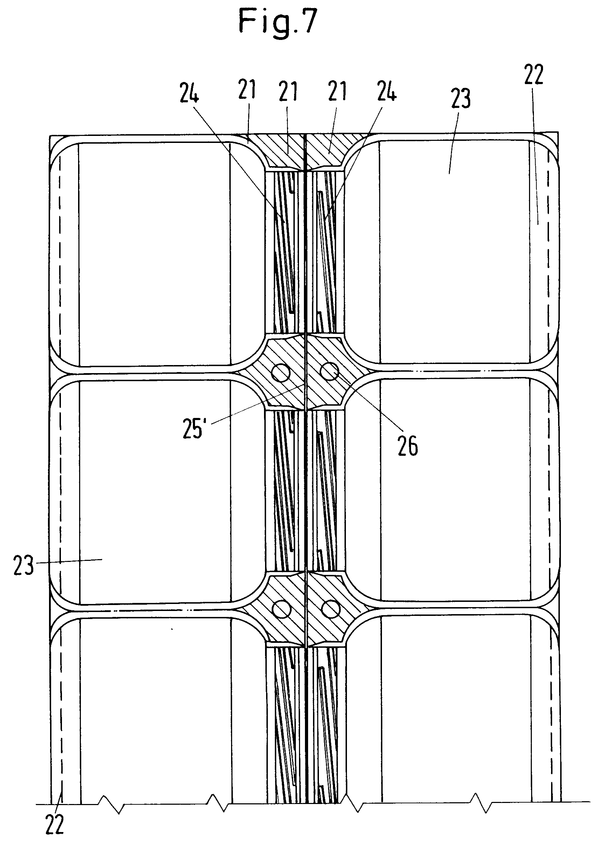

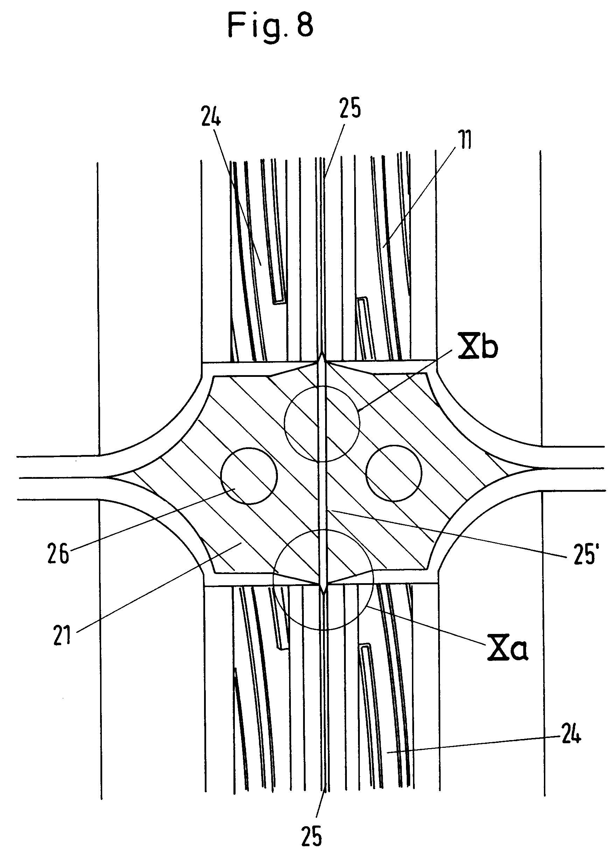

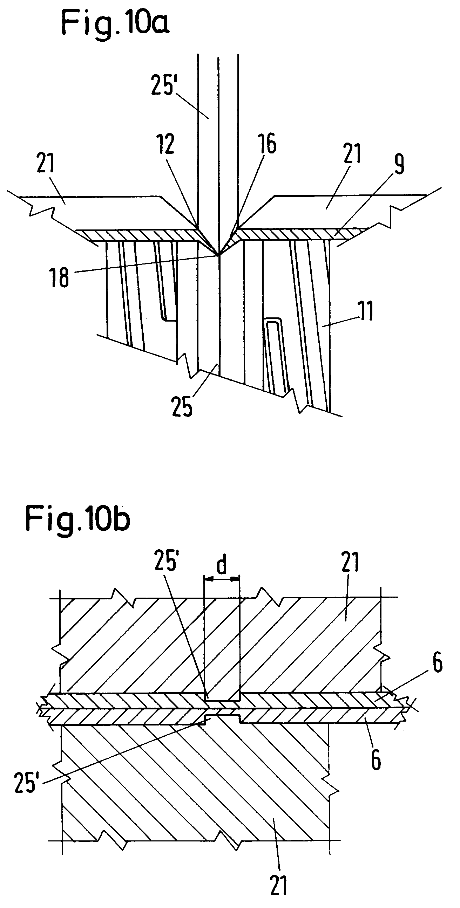

Die Vorrichtung zur Herstellung der beschriebenen Verpackung ist anhand der Figuren 7, 8 und 10 zu erkennen. Dabei ist zu beachten, daß die Figuren 8 und 10 vergrößerte Einzelheiten aus Figur 7 darstellen. In Figur 7 blickt man auf drei Formhälftenpaare, deren unteres Paar abgebrochen ist. Da jede Gesamtformhälfte aus zwei Formhälften 23 aufgebaut ist und jede Gesamtformhälfte zur nächsten gleich ausgestaltet ist, wird hier nur eine Gesamtformhälfte beschrieben, denn die Merkmale wiederholen sich bei den anderen. Jede Gesamtformhälfte wird also aus zwei Formhälften 23 gebildet, die spiegelbildlich ausgestaltet und mit ihrem jeweiligen Bundteil 24 so zueinander angeordnet sind, daß die Formhälften 23 an den Bundteilen 24 gegeneinanderliegen. Damit sind beide Formhälften 23 über eine gemeinsame, erhabene Kante 25 verbunden. Diese ist zur deutlicheren Darstellung in den Figuren 8 und 10 gezeichnet. Außen sind die zu einer Einheit zusammengefaßten Formhälften 23 durch ein Randteil 21 verbunden, welches im wesentlichen in einer Ebene liegt und den Hohlraum geschlossen außen umgibt. Im Bereich der rechten und linken Kante, die sich in Figur 7 von oben nach unten erstrecken, ist das jeweilige Randteil 21 durch ein zweiteiliges Randformwerkzeug 22 verdeckt, welches zwecks besserer Entformung beweglich sein muß. Nach Figur 3a oder 5 muß die Naht 6 in der Vertiefung 7 laufen, weshalb zum Entformen die Werkzeuge 22 zweiteilig und beweglich sein müssen.

Man erkennt aus Figur 7, daß jeweils die zwei spiegelbildlich ausgestalteten und einander gegenüberliegenden Formhälften 23 wie ein herkömmliches Tiefziehwerkzeug außen von dem ebenen Randteil 21 geschlossen umgeben sind. Die Bundteile 24 befinden sich dagegen im mittleren Bereich und können daher gut je nach Wunsch der Endform ausgestaltet werden, z.B. mit einem Innengewinde 10 oder einem Außengewinde 11 versehen werden.

Neben den Bundteilen 24 befinden sich Randteile 21 mit Auswerfstiften 26, welche dem besseren Entformen nach dem Tiefziehvorgang dienen. Im Bereich des Randteiles 21 zwischen zwei Auswerfstiften 26 ist eine etwa 1 mm breite Rippe 25' zu erkennen, die sich sozusagen als weiterführende Fortsetzung die im Querschnitt V-förmige, erhabene Kante 25 zwischen zwei Bünden 24 verlängert. Auch diese erhabene Rippe 25' ist zwei Formhälften 23 gemeinsam.

Bei der Figur 8 erkennt man im oberen Bereich zwei aneinanderliegende Bundteile 24, darunter die Randteile 21 mit den Auswerfstiften 26 und anschließend darunter wieder zwei Bundteile 24. Die gemeinsame Trennlinie von oben nach unten ist erhaben und setzt sich zusammen aus der V-förmigen Kante 25 oben und unten jeweils zwischen den Bundteiien 24 und der Rippe 25' dazwischen.

In Figur 10b sieht man eine Vergrößerung entsprechend dem gestrichelten Kreis Xb der Figur 8, allerdings zusätzlich zum besseren Verständnis mit Packungswandungen, nämlich deren Nähten 6 zwischen dem einen Randteil 21 einer Formhälfte auf einer Maschinenseite und einem anderen Randteil 21 einer Formhälfte auf der anderen Maschinenseite. Jedes Randteil 21 hat in der Mitte die Rippe 25', die zum Material, d.h. der Naht 6 der Verpackung hin, heraussteht. Die Breite ist durch die zwei gestrichelten Linien und die Pfeile mit d gekennzeichnet. Sie beträgt bei dieser Ausführungsform 1 mm. Man erkennt daher die übertrieben große Darstellung der Figur 10b. Dies ist zum besseren Verständnis gedacht.

An der Stelle des Werkzeuges, wo das Bundteil 24 nach außen hin endet, ist in Figur 8 der gestrichelte Kreis Xa dargestellt, bei dem die Dichtfläche 16 neben der freien oberen Kante 12 des Bundes 9 (Produkt, Werkstück) deutlich hervorgeht. Die zwei gegeneinanderliegenden Bünde 9 sind in Figur 10a abgebrochen und gestrichelt dargestellt, wobei es auf ihre keilförmig verjüngte, scharfe Kante 18 ankommt, die - auf das Werkzeug übertragen - entlang der gemeinsamen erhabenen Kante 25 verläuft. Dort, wo in Figur 10a die Kante 18 als Verbindungspunkt erscheint, geht die erhabene Rippe 25' (oben) in die im Querschnitt V-förmige erhabene Kante 25 (unten) über.

Man erkennt, wie durch das Tiefziehen die Kunststoffplatte über die erhabene Kante 25 gelegt und so aufgezogen werden kann, daß eine Verdünnung des Materials zur Bildung der Kante 18 an der Dichtfläche 16 erzeugt werden kann. Entlang dieser erhabenen Kante 25 kann bei dem Werkzeug die nadelförmige Erhöhung vorgesehen werden, die als kleiner Punkt erscheinen würde, in den Figuren hier aber nicht dargestellt ist.

### Bezugszeichenliste

- 1: Seitenwände
- 2: Boden
- 3: Oberwand
- 4: Griffmulde
- 5: Längsmittelachse
- 5': Längsachse
- 6: Naht
- 7: Vertiefung
- 8: Ausgießöffnung
- 9: Bund
- 10: Innengewinde
- 10a: Gewindeabschnitte
- 11: Außengewinde
- 11a: Gewindeabschnitte
- 12: Rand
- 13: Stück
- 14: Pfeil, Trennlinie
- 15: Schraubdeckel
- 16: Dichtfläche
- 17: Abdichtmasse
- 18: Kreis, Kante
- 19: Bundteil
- 20: Außenkante
- 21: Randteil
- 22: Randformwerkzeug
- 23: Formhälften
- 24: Bundteil
- 25: Kante
- 25': Rippe
- 26: Auswerfstifte

## Patentansprüche

1. Verpackung für fließfähiges Füllgut mit tubusförmigen Seitenwänden (1), Boden (2) und Oberwand (3), die alle aus tiefziehfähigem Kunststoff bestehen, wobei die Oberwand (3) eine mit einem Deckel (15) verschließbare Ausgießöffnung mit hochstehendem Bund (9) aufweist und eine die Packung in einer Ebene parallel zur Längsmittelachse (5) umziehenden Naht (6) derart im Oberboden (3) angeordnet ist, daß sie von der Ausgießöffnung (8) unterbrochen ist und auf diametral gegenüberliegenden Seiten bis fast an den freien, oberen Rand (12) des Bundes (9) ragt, wobei der Bund (9) aus zwei an der Naht verbundenen Bundhälften zusammengesetzt ist, an dem Bund (9) Gewindeeinrichtungen (10, 11) vorgesehen sind, um einen Schraubdeckel (15) mit entsprechendem Gewinde und einer Dichtfläche auf die Verpackung aufzuschrauben, und wobei am freien oberen Rand (12) des Bundes (9) eine ringförmige, passende Dichtvorrichtung (16) angebracht ist, dadurch gekennzeichnet, daß die Dichtvorrichtung (16) eine ringförmige Fläche ist.

2. Verpackung nach Anspruch 1, dadurch gekennzeichnet, daß das Gewinde (10, 11) in dem Bund (9) angeordnet ist.

3. Verpackung nach Anspruch 1, dadurch gekennzeichnet, daß das Gewinde von der Naht (6) gebildet ist.

4. Verpackung nach Anspruch 1 oder 2, dadurch gekennzeichnet, daß das Gewinde in dem Bund (9) an der Ausgießöffnung (8) ein vorzugsweise rundum geschlossenes Innengewinde (10) ist und der Schraubdeckel (15) außen im Querschnitt U-förmig mit zum Oberboden (3) hin offenem U ausgestaltet ist und auf seiner Dichtfläche mit einer Abdichtmasse (17) versehen ist.

5. Verpackung nach einem der Ansprüche 1, 2 und 4, dadurch gekennzeichnet, daß die Dichfläche (16) des Bundes (9) und die des Schraubdeckels (15) kegelstumpfförmig ausgestaltet sind.

6. Verpackung nach Anspruch 1 oder 2, dadurch gekennzeichnet, daß das Gewinde (11) an dem Bund (9) neben der Ausgießöffnung (8) ein Außengewinde (11) ist und daß die Dichtfläche (16) kreisringförmig ist und sich von der äußeren, freien Kante (12) des Bundes (9) zur Mitte der Öffnung (8) hin erstreckt.

7. Verpackung nach einem der Ansprüche 1, 2 und 6, dadurch gekennzeichnet, daß auf der ringförmigen Dichtfläche (16) eine schweißbare Deckfolie als Licht- und/oder Gasbarriere aufgesiegelt ist.

8. Verpackung nach einem der Ansprüche 1, 2, 6 und 7, dadurch gekennzeichnet, daß der Bund (9) an der Ausgießöffnung (8) im Bereich der Naht (6) auf diametral gegenüberliegenden Seiten nach innen derart abgeflacht ist, daß ein ebener Bundteil (19) ohne Gewinde beidseitig der Naht (6) vorgesehen ist und daß die Außenkante (20) der Naht (6) nicht über das Grundprofil des Bundes (9) hinausragt.

9. Verpackung nach einem der Ansprüche 1, 2, 6, 7 und 8, dadurch gekennzeichnet, daß die aus dem Bund (9) vorstehende Naht (6) außen (bei 20) in Fortsetzung des Außengewindes (11) profiliert ausgeschnitten ist.

10. Verpackung nach einem der Ansprüche 1, 2 und 4 bis 9, dadurch gekennzeichnet, daß das Gewinde (10, 11) ein mindestens zweigängiges Gewinde (10, 10a; 11, 11a) ist.

11. Verpackung nach einem der Ansprüche 1, 2 und 4 bis 10, dadurch gekennzeichnet, daß die ringförmige Dichfläche (16) am oberen Rand (12) des Bundes (9) etwa keilförmig verjüngt in eine fast scharfe Kante (18) ausläuft.

12. Verfahren zur Herstellung einer Verpackung für fließfähiges Füllgut mit tubusförmigen Seitenwänden (1), Boden (2) und Oberwand (3), die alle aus tiefziehfähigem Kunststoff bestehen, wobei die Oberwand (3) eine mit einem Deckel (15) verschließbare Ausgießöffnung (8) mit hochstehendem Bund (9) aufweist und eine die Packung in einer Ebene parallel zur Längsmittelachse (5) umziehenden Naht (6) derart im Oberboden (3) angeordnet ist, daß sie von der Ausgießöffnung (8) unterbrochen ist und auf diametral gegenüberliegenden Seiten bis fast an den freien, oberen Rand (12) des Bundes (9) ragt, wobei aus dem ebenen, tiefziehfähigen Kunststoffteil gleichzeitig wenigstens ein Paar von Halbschalen tiefgezogen wird, dadurch gekennzeichnet, daß die in der Mitte über einen halbzylindrischen Verbindungskanal miteinander verbunden sind, wobei innerhalb der in einer gemeinsamen Ebene liegenden, rundumlaufenden, geschlossenen Naht (6) ein halbschalenförmiger Packungsteil gebildet wird, der nach dem Tiefziehen mit einem zweiten unter Verbinden der Naht (6) zu wenigstens einem Paar von Packungen verbunden wird, wonach in der Mitte des zylindrischen Verbindungskanales getrennt wird, so daß wenigstens eine einseitig offene Packung mit jeweils einem Bund (9) gebildet wird, an dessen freiem, oberem Rand (12) eine ringförmige Dichfläche (16) entsteht.

13. Verfahren nach Anspruch 12, dadurch gekennzeichnet, daß die halbschalenförmigen Packungsteile durch die noch vorhandene Restwärme des Tiefziehvorganges zu einem Paar von Packungen verbunden werden.

14. Verfahren zur Herstellung einer Verpackung für fließfähiges Füllgut mit tubusförmigen Seitenwänden (1), Boden (2) und Oberwand (3), die alle aus tiefziehfähigem Kunststoff bestehen, wobei die Oberwand (3) eine mit einem Deckel (15) verschließbare Ausgießöffnung (8) mit hochstehendem Bund (9) aufweist und eine die Packung in einer Ebene parallel zur Längsmittelachse (5) umziehenden Naht (6) derart im Oberboden (3) angeordnet ist, daß sie von der Ausgießöffnung (8) unterbrochen ist und auf diametral gegenüberliegenden Seiten bis fast an den freien, oberen Rand (12) des Bundes (9) ragt, wobei aus dem ebenen, tiefziehfähigen Kunststoffteil gleichzeitig wenigstens ein Paar von Halbschalen tiefgezogen wird, dadurch gekennzeichnet, daß die Bünde (9) einander gegenüberliegen und innerhalb der in einer gemeinsamen Ebene liegenden, rundumlaufenden, geschlossenen Naht (6) ein halbschalenförmiger Packungsteil gebildet wird, der nach dem Tiefziehen mit einem zweiten unter Verbinden der Naht (6) durch die noch vorhandene Restwärme des Tiefziehvorganges zu wenigstens einem Paar von Packungen verbunden wird, wonach zwischen den Bünden (9) getrennt wird, um wenigstens eine einseitig offene Packung mit einem Bund (9) zu bilden, an dessen freiem, oberem Rand (12) eine ringförmige Dichtfläche (16) entsteht.

15. Verfahren nach einem der Ansprüche 12 bis 14, dadurch gekennzeichnet, daß die kegelstumpfförmige Dichtfläche (16) nach dem Trennen des Formlings zwischen den Bünden (9) nach außerhalb der Packung hochsteht und - vorzugsweise nach dem Füllen - zu einem in das Innere der Packung ragenden Kegelstumpf eingeformt wird.

16. Verfahren nach einem der Ansprüche 12 bis 14 oder 15, dadurch gekennzeichnet, daß der freie, obere Rand der einseitig offenen Packung längs der Trennlinie (14) unter Einwirkung von Wärme geglättet wird.

17. Vorrichtung zum Tiefziehen von Halbschalen aus einer Kunststoffplatte, mit zwei spiegelbildlich ausgestaltete Formhälften (23) mit jeweils einem Bundteil (24), dadurch gekennzeichnet, daß die Formhälften (22) an den Bundteilen (24) gegeneinanderliegen und daß die zwei Formhälften (23) mit den Bundteilen (24) über eine gemeinsame, erhabene Kante (25) verbunden sind, die im Bereich der Bundteile im Querschnitt V-förmig ist.

18. Vorrichtung nach Anspruch 17, dadurch gekennzeichnet, daß in dem jeweiligen Bundteil (24) ein wenigstens zweigängiges Gewinde (10, 11) angeordnet ist.

19. Vorrichtung nach Anspruch 17 oder 18, dadurch gekennzeichnet, daß in Verlängerung der V-förmigen, erhabenen Kante (25) in dem jeweiligen an den Bundteil (24) anschließenden Randteil (21) eine weiterführende, erhabene, etwa 1 mm breite Rippe (25') vorgesehen ist, weiche zwei gegeneinanderliegenden Formhälften (23) gemeinsam ist.

20. Vorrichtung nach einem der Ansprüche 17 bis 19, dadurch gekennzeichnet, daß im Bereich der im Querschnitt V-förmigen, erhabenen Kante (25) wenigstens eine, die Kante (25) nach innen überragende, etwa nadelförmige Erhöhung vorgesehen ist.

21. Vorrichtung nach einem der Ansprüche 17 bis 20, dadurch gekennzeichnet, daß Einrichtungen vorgesehen sind zum formgerechten, parallelen Zusammenführen wenigstens zweier Formhälften (23) und Zusammenführen der jeweils rundum geschlossenen Randteile (21) der spiegelbildlich ausgestalteten Formhälften (23) für ein Zusammenschweißen der darin befindlichen Halbschalen.

## Claims

1. A pack for filling material which is capable of flow, comprising tubular side walls (1), a bottom (2) and a top wall (3) which all comprise deep-drawable plastics material, wherein the top wall (3) has a pouring opening which can be closed with a cover (15) and which has an upstanding collar (9) and a seam (6) extending around the pack in a plane parallel to the longitudinal central axis (5) is arranged in the top wall (3) in such a way that it is interrupted by the pouring opening (8) and projects on diametrally oppositely disposed sides almost as far as the free upper edge (12) of the collar (9), wherein the collar (9) is made up of two collar halves which are connected at the seam, screwthread means (10, 11) are provided at the collar (9) to screw a screw cover (15) with corresponding screwthread and a sealing surface on to the pack, and wherein provided at the free upper edge (12) of the collar (9) is a corresponding annular sealing means (16), characterised in that the sealing means (16) is an annular surface.

2. A pack according to claim 1 characterised in that the screwthread (10, 11) is arranged in the collar (9).

3. A pack according to claim 1 characterised in that the screwthread is formed by the seam (6).

4. A pack according to claim 1 or claim 2 characterised in that the screwthread in the collar (9) at the pouring opening (8) is an internal screwthread (10) which is preferably closed therearound and the screw cover (15) is of a U-shaped configuration in cross-section on the outside with the U-shape open towards the top wall (3) and is provided on its sealing surface with a sealing material (17).

5. A pack according to one of claims 1, 2 and 4 characterised in that the sealing surface (16) of the collar (9) and that of the screw cover (15) are of a frustoconical configuration.

6. A pack according to claim 1 or claim 2 characterised in that the screwthread (11) on the collar (9) beside the pouring opening (8) is an external screwthread (11) and that the sealing surface (16) is in the form of a circular ring and extends from the outer free edge (12) of the collar (9) towards the centre of the opening (8).

7. A pack according to one of claims 1, 2 and 6 characterised in that a weldable cover foil is sealed as a light and/or gas barrier on the annular sealing surface (16).

8. A pack according to one of claims 1, 2, 6 and 7 characterised in that the collar (9) at the pouring opening (8) is flattened in the region of the seam (6) on diametrally oppositely disposed sides in an inward direction in such a way that a flat collar portion (19) without screwthread is provided on both sides of the seam (6) and that the outer edge (20) of the seam (6) does not project beyond the basic profile of the collar (9).

9. A pack according to one of claims 1, 2, 6, 7 and 8 characterised in that the seam (6) which projects out of the collar (9) is cut-out on the outside (at 20) in a profiled configuration as a continuation of the external screwthread (11).

10. A pack according to one of claims 1, 2 and 4 to 9 characterised in that the screwthread (10, 11) is an at least two-flight screwthread (10, 10a; 11, 11a).

11. A pack according to one of claims 1, 2 and 4 to 10 characterised in that the annular sealing surface (16) at the upper edge (12) of the collar (9) terminates in a substantially wedge-shaped tapered configuration in an almost sharp edge (18).

12. A process for the production of a pack for filling material which is capable of flow, comprising tubular side walls (1), a bottom (2) and a top wall (3) which all comprise deep-drawable plastics material, wherein the top wall (3) has a pouring opening (8) which can be closed with a cover (15) and which has an upstanding collar (9) and a seam (6) extending around the pack in a plane parallel to the longitudinal central axis (5) is arranged in the top wall (3) in such a way that it is interrupted by the pouring opening (8) and projects on diametrally oppositely disposed sides almost as far as the free upper edge (12) of the collar (9), wherein at least one pair of half-shells is simultaneously deep-drawn from the flat deep-drawable plastics portion, characterised in that they are connected together at the centre by way of a semicylindrical connecting passage, wherein formed within the closed seam (6) which is disposed in a common plane and which extends all around is a pack portion of half-shell shape which after the deep-drawing operation is connected to a second one with the seam (6) being connected to form at least one pair of packs, whereafter the assembly is separated at the centre of the cylindrical connecting passage so that there is formed at least one pack that is open at one side with a respective collar (9), at whose free upper edge (12) there is an annular sealing surface (16).

13. A process according to claim 12 characterised in that the pack portions of half-shell shape are connected by the residual heat which still remains from the deep-drawing operation, to form a pair of packs.

14. A process for the production of a pack for filling material which is capable of flow, comprising tubular side walls (1), a bottom (2) and a top wall (3) which all comprise deep-drawable plastics material, wherein the top wall (3) has a pouring opening (8) which can be closed with a cover (15) and which has an upstanding collar (9) and a seam (6) extending around the pack in a plane parallel to the longitudinal central axis (5) is arranged in the top wall (3) in such a way that it is interrupted by the pouring opening (8) and projects on diametrally oppositely disposed sides almost as far as the free upper edge (12) of the collar (9), wherein at least one pair of half-shells is simultaneously deep-drawn from the flat deep-drawable plastics portion, characterised in that the collars (9) bear against each other and formed within the closed seam (6) which is disposed in a common plane and which extends all around is a pack portion of half-shell shape which after the deep drawing operation is connected to a second one with the seam (6) being connected by the residual heat which still remains from the deep-drawing operation to form at least one pair of packs, whereafter the assembly is separated between the collars (9) in order to form at least one pack which is open at one side and which has a collar (9), at whose free upper edge (12) there is an annular sealing surface (16).

15. A process according to one of claims 12 to 14 characterised in that after separation of the moulding the frustoconical sealing surface (16) stands up between the collars (9) outwardly of the pack and - preferably after the filling operation - is shaped in to form a truncated cone projecting into the interior of the pack.

16. A process according to one of claims 12 to 14 or 15 characterised in that the free upper edge of the pack which is open at one side is smoothed along the separation line (14) under the effect of heat.

17. Apparatus for deep-drawing half-shells from a plastics plate comprising two mould halves (23) of mirror-image configuration and each having a collar portion (24), characterised in that the mould halves (23) bear against each other at the collar portions (24) and that the two mould halves (23) are connected with the collar portions (24) by way of a common raised edge (25) which is of V-shaped configuration in cross-section in the region of the collar portions.

18. Apparatus according to claim 17 characterised in that an at least two-flight screwthread (10, 11) is arranged in each respective collar portion (24).

19. Apparatus according to claim 17 or claim 18 characterised in that provided in a prolongation of the V-shaped raised edge (24) in the respective edge portion (21) adjoining the collar portion (24) is a raised rib (25') which extends further and which is about 1 mm in width and which is common to two oppositely disposed mould halves (23).

20. Apparatus according to one of claims 17 to 19 characterised in that provided in the region of the raised edge (25) which is of V-shaped configuration in cross-section is at least one approximately needle-shaped raised portion which projects inwardly beyond the edge (25).

21. Apparatus according to one of claims 17 to 20 characterised in that there are provided means for properly guiding at least two mould halves (23) together in parallel relationship and for guiding together the respective edge portions (21) which are closed all around of the mould halves (23) of mirror-image configuration for welding together the half-shells disposed therein.

## Revendications

1. Emballage pour un produit liquide, comportant des parois latérales tubulaires (1), un fond (2) et une paroi supérieure (3), constitués d'un plastique emboutissable, où la paroi supérieure (3) comporte un bec verseur, pouvant être obturé par un couvercle (15) et comportant une collerette relevée (9), et un joint (6), qui entoure l'emballage dans un plan parallèle à l'axe longitudinal (5), est disposé sur le fond supérieur (3) de façon à être interrompu par le bec verseur (8) et à dépasser, sur les faces diamétralement opposées, presque jusqu'au niveau du bord supérieur libre (12) de la collerette (9), où la collerette (9) est composée de demi-collerettes assemblées par le joint, des dispositifs filetés (10, 11) sont prévus au niveau de la collerette (9), pour visser un couvercle fileté (15), ayant un filetage correspondant et une surface d'étanchéité, sur l'emballage, et où un dispositif d'étanchéité annulaire approprié (16) est rapporté au bord supérieur libre (12) de la collerette (9), caractérisé en ce que le dispositif d'étanchéité (16) est une surface annulaire.

2. Emballage selon la revendication 1, caractérisé en ce que le filetage (10, 11) est disposé dans la collerette (9).

3. Emballage selon la revendication 1, caractérisé en ce que le filetage est constitué du joint (6).

4. Emballage selon la revendication 1 ou 2, caractériséen ce que le filetage, dans la collerette (9), contre le bec verseur (8), est un filetage intérieur (10) de préférence fermé sur sa périphérie, et le couvercle fileté (15) est, à l'extérieur, configuré de façon à avoir en section transversale la forme d'un U, le U étant ouvert vers le fond supérieur (3), et est, sur sa surface d'étanchéité, pourvu d'une composition d'étanchéité (17).

5. Emballage selon l'une des revendications 1, 2 et 4, caractérisé en ce que la surface d'étanchéité (16) de la collerette (9) et celle du couvercle fileté (15) ont la forme d'un tronc de cône.

6. Emballage selon la revendication 1 ou 2, caractérisé en ce que le filetage (11), contre la collerette (9), est un filetage extérieur (11) à côté du bec verseur (8), et que la surface d'étanchéité (16) a une forme annulaire et s'étend, à partir de l'arête libre extérieure (12) de la collerette (9), jusqu'au milieu du bec (8).

7. Emballage selon l'une des revendications 1, 2 et 6, caractérisé en ce qu'une feuille de couverture soudable est appliquée par thermoscellage, sur la surface d'étanchéité annulaire (16), pour servir de barrière à la lumière et/ou aux gaz.

8. Emballage selon l'une des revendications 1, 2, 6 et 7, caractérisé en ce que la collerette (9), au niveau du bec verseur (8) et au voisinage du joint (6), est aplati vers l'intérieur, sur les faces diamétralement opposées, de façon qu'une partie de collerette plane (19) soit prévue sans filetage des deux côtés du joint (6), et que l'arête extérieure (20) du joint (6) ne dépasse pas au-delà du profil de base de la collerette (9).

9. Emballage selon l'une des revendications 1, 2, 6, 7 et 8, caractérisé en ce que le joint (6) qui dépasse de la collerette (9) est à l'extérieur (en 20) découpé d'une manière profilée en prolongation du filetage extérieur (11).

10. Emballage selon l'une des revendications 1, 2 et 4 à 9, caractérisé en ce que le filetage (10, 11) est un filetage au moins double (10, 10a ; 11, 11a).

11. Emballage selon l'une des revendications 1, 2 et 4 à 10, caractérisé en ce que la surface d'étanchéité annulaire (16), au niveau du bord supérieur (12) de la collerette (9), se rétrécit approximativement en forme de coin, pour se prolonger par une arête presque vive (18).

12. Procédé de fabrication d'un emballage pour un produit liquide, comportant des parois latérales tubulaires (1), un fond (2) et une paroi supérieure (3), qui tous sont constitués d'un plastique emboutissable, où la paroi supérieure (3) est un bec verseur (8) pouvant être obturé par un couvercle (15) et ayant une collerette relevée (9), et un joint (6), qui entoure l'emballage dans un plan parallèle à l'axe longitudinal (5), est disposé dans le fond supérieur (3) de façon à être interrompu par le bec verseur (8) et à dépasser, sur les faces diamétralement opposées, presque jusqu'au niveau du bord supérieur libre (12) de la collerette (9), où au moins une paire de demi-coques sont simultanément embouties à partir de la pièce plastique emboutissable plane, caractérisé en ce que les demi-coques sont assemblées l'une à l'autre au milieu par l'intermédiaire d'un canal de liaison semi-cylindrique, où, à l'intérieur du joint (6), fermé, périphérique, se trouvant dans un plan commun, en forme une partie d'emballage en forme de demi-coque, partie d'emballage qui, après l'emboutissage, est assemblée à une deuxième, avec assemblage du joint (6) à au moins une paire d'emballages, ce après quoi on procède à une séparation au milieu du canal de liaison cylindrique, de façon à former au moins un emballage ouvert sur un côté, ayant chacun une collerette (9), à l'extrémité supérieure libre (12) de laquelle se forme une surface d'étanchéité annulaire (16).

13. Procédé selon la revendication 12, caractérisé en ce que les parties d' emballage en forme de demi-coque sont assemblées, pour donner une paire d'emballages, sous l'effet de la chaleur encore présente de l'opération d'emboutissage.

14. Procédé pour fabriquer un emballage pour produits liquides, comportant des parois latérales tubulaires (1), un fond (2) et une paroi supérieure (3), qui tous sont constitués d'un plastique emboutissable, où la paroi supérieure (3) comporte un bec verseur (8), pouvant être obturé par un couvercle (15) et comportant une collerette relevée (9), et un joint (6), qui entoure l'emballage dans un plan parallèle à l'axe longitudinal (5), est disposé contre le fond supérieur (3) de façon à être interrompu par le bec verseur (8) et à dépasser, sur les faces diamétralement opposées, presque jusqu'au bord supérieur libre (12) de la collerette (9), où, à partir de la pièce plastique emboutissable plane, au moins une paire de demi-coques sont simultanément embouties, caractérisé en ce que les collerettes (9) s'opposent l'une à l'autre, et, à l'intérieur du joint fermé (6), périphérique, se trouvant dans un plan commun, il se forme une partie d'emballage en forme de demi-coque, qui, après l'emboutissage, est assemblée à une deuxième, par assemblage du joint (6) sous l'effet de la chaleur résiduelle encore présente de l'opération d'emboutissage, pour donner au moins une paire d'emballages, ce après quoi on procède à une séparation entre les collerettes (9), pour former au moins un emballage, ouvert sur un côté et comportant une collerette (9), à l'extrémité supérieure libre (12) de laquelle se forme une surface d'étanchéité annulaire (16).

15. Procédé selon l'une des revendications 12 à 14, caractérisé en ce que la surface d'étanchéité (16) en forme de tronc de cône est relevée, après séparation de l'ébauche entre les collerettes (9) vers l'extérieur de l'emballage, et, de préférence après le remplissage, est façonnée pour donner un tronc de cône qui dépasse dans le volume intérieur de l'emballage.

16. Procédé selon l'une des revendications 12 à 14 ou 15, caractérisé en ce que l'extrémité supérieure libre de l'emballage ouvert sur un côté est lissée le long de la ligne de séparation (14) sous l'effet de la chaleur.

17. Dispositif pour emboutir des demi-coques constituées à partir d'une plaque de matériau plastique, comportant deux moitiés (23), de configuration symétrique, comportant chacune une partie en collerette (24), caractérisé en ce que les moitiés (22) sont opposées l'une à l'autre au niveau des parties de collerette (24), et que les deux moitiés (23) sont assemblées avec les parties de collerette (24) par l'intermédiaire d'une arête commune en relief (25), qui, dans la zone des parties de collerette, a en coupe transversale la forme d'un V.

18. Dispositif selon la revendication 17, caractérisé en ce qu'un filetage au moins double (10, 11) est disposé dans la partie de collerette (24).

19. Dispositif selon la revendication 17, ou 18, caractérisé en ce que, dans le prolongement de l'arête en relief (25) en forme de V, dans la partie de bord (21) qui se raccorde à la partie de collerette (24), on prévoit une nervure (25'), en relie!, qui se poursuit et qui a une largeur d'environ 1 mm, nervure qui est commune à deux moitiés opposées (23).

20. Dispositif selon l'une des revendications 17 à 19, caractérisé en ce que, dans la zone de l'arête (25) en relief ayant en coupe transversale la forme d'un V, on prévoit au moins une élévation, ayant approximativement la forme d'une aiguille, qui dépasse de l'arête (25) vers l'intérieur.

21. Dispositif selon l'une des revendications 17 à 20, caractérisé en ce qu'on prévoit des dispositifs pour réunir, dans des conditions parallèles et de forme appropriée, au moins deux moitiés (23), et pour réunir les parties de bord (21), dont chacune est fermée sur sa périphérie, des moitiés (23) de configuration symétrique, pour assurer un assemblage par soudure des demi-coques qui s'y trouvent.
